# EUROPEAN PATENT APPLICATION

(11) **EP 4 800 936 A1**
(43) Date of publication of application: **02.09.2026**
(21) Application number: 24890371.8
(22) Date of filing: 09.10.2024
(51) Int. Cl.: H04B 7/0456

(54) **COMMUNICATION METHOD AND APPARATUS**

(30) Priority: 15.11.2023 CN 202311527420
(71) Applicant: Huawei Technologies Co., Ltd., Shenzhen, Guangdong 518129 (CN)
(72) Inventor: DONG, Changzhao, Shenzhen, Guangdong 518129 (CN); GAO, Xiang, Shenzhen, Guangdong 518129 (CN); ZHANG, Zhening, Shenzhen, Guangdong 518129 (CN); LIU, Kunpeng, Shenzhen, Guangdong 518129 (CN)
(74) Representative: Körber, Martin Hans
(86) International application number: PCT/CN2024/123608
(87) International publication number: WO 2025/103013

(57) **Abstract**

A communication method and apparatus are provided to enable PUSCH transmission over *Z* antenna ports. When *Z* is small, the method is applicable to more prevalent terminals with a small quantity of uplink transmit antennas, thereby reducing terminal costs. The method includes: A terminal transmits a first physical uplink shared channel PUSCH over *Z* antenna ports. The *Z* antenna ports are precoded based on a third precoding matrix. The third precoding matrix includes a first precoding matrix and/or a second precoding matrix, or includes a submatrix of the second precoding matrix. *Z* is a positive integer greater than 1. The first precoding matrix is a precoding matrix for PUSCH transmission over *K* antenna ports, and *K* is a positive integer. The second precoding matrix is a precoding matrix for PUSCH transmission over *Y* antenna ports, where *Y = 2^{X},* and *X* is a positive integer. For example, *K* = 1, *Y* = 2, *and Z* = 3. Alternatively, *Y =* 4, *and Z* = 3.

## Description

This application claims priority to Chinese Patent Application No. 202311527420.0, filed with the China National Intellectual Property Administration on November 15, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

A new radio (new radio, NR) system supports two transmission modes in the uplink direction: codebook (codebook)-based physical uplink shared channel (physical uplink shared channel, PUSCH) transmission and non-codebook-based PUSCH transmission.

In codebook-based PUSCH transmission, a terminal device sends an SRS on a sounding reference signal (sounding reference signal, SRS) resource configured by a base station. The base station measures the SRS, determines channel state information (channel state information, CSI) parameters based on the measurement result, and indicates the CSI parameters to the terminal device via downlink control information (downlink control information, DCI). The CSI parameters include an SRS resource indicator (SRS resource indicator, SRI), a transmit precoding matrix indicator (transmit precoding matrix indicator, TPMI), and a transmit rank indicator (transmit rank indicator, TRI).

Currently, in related standards, a codebook (namely, a precoding matrix set) is designed for uplink eight-transmit-antenna (8Tx) PUSCH transmission scenarios. However, commercial terminal devices in existing networks are limited by constraints such as cost and complexity. As a result, terminal devices with a large quantity of antennas are usually in the form of fixed wireless access (fixed wireless access, FWA) devices, customer premises equipment (customer premises equipment, CPE), or similar devices.

For more prevalent terminal devices in existing networks, such as commercial mobile phones, a quantity of uplink transmit antennas is usually small. Therefore, it is necessary to design a codebook for scenarios with a small quantity of uplink transmit antennas.

### SUMMARY

This application provides a communication method and apparatus to enable PUSCH transmission over *Z* antenna ports. When *Z* is small, the method is applicable to more prevalent terminals with a small quantity of uplink transmit antennas, thereby reducing terminal costs.

According to a first aspect, a communication method is provided. The method may be performed by a terminal; may be performed by a component of the terminal, for example, a processor, a chip, or a chip system of the terminal; or may be implemented by a logical module or software that can implement all or some functions of the terminal. The method includes: receiving first information and/or second information, and transmitting a first PUSCH over *Z* antenna ports. The first information indicates a first precoding matrix, the first precoding matrix is a precoding matrix for PUSCH transmission over *K* antenna ports, and *K* is a positive integer. The second information indicates a second precoding matrix, the second precoding matrix is a precoding matrix for PUSCH transmission over *Y* antenna ports, *Y =* 2*^{X},* and *X* is a positive integer. The *Z* antenna ports are precoded based on a third precoding matrix. In other words, a quantity of rows of the third precoding matrix is *Z.* The third precoding matrix includes the first precoding matrix and/or the second precoding matrix, or the third precoding matrix includes a submatrix of the second precoding matrix, and *Z* is a positive integer greater than 1.

Based on this solution, a precoding matrix for PUSCH transmission over the *Z* antenna ports may be obtained based on the precoding matrix for PUSCH transmission over the *K* antenna ports and/or the precoding matrix for PUSCH transmission over the *Y =* 2*^{X}* antenna ports to enable PUSCH transmission over the *Z* antenna ports. When *Z* is less than 4 (for example, *Z* = 3), the method is applicable to more prevalent terminals with a small quantity of uplink transmit antennas, thereby reducing terminal costs. In addition, a current standard defines precoding matrices for PUSCH transmission over two antenna ports and four antenna ports. Therefore, the second precoding matrix for PUSCH transmission over the *Y =* 2*^{X}* antenna ports may be a precoding matrix for two or four antenna ports as defined in the current standard, so that compatibility of the third precoding matrix with the current standard can be improved.

In a possible design, when *Y* > *Z,* and a quantity of columns of the third precoding matrix is equal to *Z ,* the method further includes: receiving third information. The third information indicates row indexes of *Z* rows that are of the second precoding matrix and that are included in the third precoding matrix; or the third information indicates a type of the third precoding matrix, and the type of the third precoding matrix indicates an association relationship between the third precoding matrix and the second precoding matrix. For example, *Y* = 4, and *Z* = 3.

Based on this possible design, a structure or the type of the third precoding matrix may be indicated to the terminal, so that the terminal can accurately determine the third precoding matrix.

In a possible design, the association relationship indicates the row indexes of the *Z* rows of the second precoding matrix, and the submatrix of the second precoding matrix includes the *Z* rows of the second precoding matrix.

In a possible design, the first precoding matrix is located in a first codebook. The method further includes: receiving fourth information, where the fourth information indicates the first codebook.

According to a second aspect, a communication method is provided. The method may be performed by a RAN node; may be performed by a component of the RAN node, for example, a processor, a chip, or a chip system of the RAN node; or may be implemented by a logical module or software that can implement all or some functions of the RAN node. The method includes: sending first information and/or second information, and receiving a first PUSCH over *Z* antenna ports. The first information indicates a first precoding matrix, the first precoding matrix is a precoding matrix for physical uplink shared channel PUSCH transmission over *K* antenna ports, and *K* is a positive integer. The second information indicates a second precoding matrix, the second precoding matrix is a precoding matrix for PUSCH transmission over *Y* antenna ports, *Y =* 2*^{X},* and *X* is a positive integer. The *Z* antenna ports are precoded based on a third precoding matrix. In other words, a quantity of rows of the third precoding matrix is *Z.* The third precoding matrix includes the first precoding matrix and/or the second precoding matrix, or the third precoding matrix includes a submatrix of the second precoding matrix, and *Z* is a positive integer greater than 1. For technical effect brought by the second aspect, refer to the technical effect brought by the first aspect. Details are not described herein again.

In a possible design, when *Y* > *Z,* and a quantity of columns of the third precoding matrix is equal to *Z,* the method further includes: sending third information, where the third information indicates a type of the third precoding matrix, and the type of the third precoding matrix indicates an association relationship between the third precoding matrix and the second precoding matrix. For example, *Y* = 4, and *Z* = 3.

In a possible design, the association relationship indicates row indexes of *Z* rows of the second precoding matrix, and the submatrix of the second precoding matrix includes the *Z* rows of the second precoding matrix.

In a possible design, the first precoding matrix is located in a first codebook, and the method further includes: sending fourth information, where the fourth information indicates the first codebook.

According to a third aspect, a communication method is provided. The method may be performed by a terminal; may be performed by a component of the terminal, for example, a processor, a chip, or a chip system of the terminal; or may be implemented by a logical module or software that can implement all or some functions of the terminal. The method includes: transmitting a first PUSCH over *Z* antenna ports. The *Z* antenna ports are precoded based on a third precoding matrix. In other words, a quantity of rows of the third precoding matrix is *Z.* The third precoding matrix includes a first precoding matrix and/or a second precoding matrix, the third precoding matrix is formed by the first precoding matrix and/or the second precoding matrix, the third precoding matrix includes a submatrix of the second precoding matrix, or the third precoding matrix is formed by the submatrix of the second precoding matrix, and *Z* is a positive integer greater than 1. The first precoding matrix is a precoding matrix for PUSCH transmission over *K* antenna ports, and *K* is a positive integer. The second precoding matrix is a precoding matrix for PUSCH transmission over *Y* antenna ports, *Y =* 2*^{X},* and *X* is a positive integer. For technical effect brought by the third aspect, refer to the technical effect brought by the first aspect. Details are not described herein again.

With reference to the first aspect, the second aspect, or the third aspect, in a possible design, when *Y* > *Z,* and the quantity of columns of the third precoding matrix is equal to *Z,* the third precoding matrix includes the submatrix of the second precoding matrix, and the submatrix corresponds to the *Z* rows; or when *Y* < *Z,* the third precoding matrix includes the first precoding matrix and/or the second precoding matrix. For example, when *Y > Z, Y =* 4, and *Z* = 3. When *Y < Z, Y = 2,* and *Z* = 3.

With reference to the first aspect, the second aspect, or the third aspect, in a possible design, when *Y* > Z, the quantity of columns of the third precoding matrix is equal to *A,* and *A* ≤ Z, the third precoding matrix **W***_{Z×a}* satisfies the following structure: ${C}_{1} \left[{W}_{Y , r = A}\left(\left[{y}_{1},{y}_{2},…,{y}_{Z}\right],:\right)\right]$

***W**_{Y,r=A}* represents the second precoding matrix with *Y* rows and *A* columns, *C*₁ represents a power coefficient, *y*₁*, y*₂, *..., y_{Z}* ∈ [1,*Y*]*,* and the third precoding matrix is a matrix with *Z* rows and *A* columns.

With reference to the first aspect, the second aspect, or the third aspect, in a possible design, when *Y* < *Z,* and the quantity of columns of the third precoding matrix is greater than 1 and less than *Z,* the third precoding matrix includes a transposed matrix of the first precoding matrix and the second precoding matrix.

With reference to the first aspect, the second aspect, or the third aspect, in a possible design, when the quantity of columns of the third precoding matrix is equal to 2, *K* = 2, the first precoding matrix is a precoding matrix with two rows and *Q* columns, the second precoding matrix is a precoding matrix with *Y* rows and two columns, and *Q + Y = Z.*

With reference to the first aspect, the second aspect, or the third aspect, in a possible design, the third precoding matrix ***W***_{*Z*×2} satisfies the following structure: ${C}_{2} \left[\begin{matrix}{W}_{2 , r = Q}^{T} \\ {W}_{Y , r = 2}\end{matrix}\right]$${W}_{2 , r = Q}^{T}$ represents the transposed matrix of the first precoding matrix, ***W***_{*Y,r=*2} represents the second precoding matrix, and *C*₂ represents a power coefficient.

With reference to the first aspect, the second aspect, or the third aspect, in a possible design, when *Y* < *Z,* and the quantity of columns of the third precoding matrix is equal to 1, *K =* 1, and the third precoding matrix includes the first precoding matrix and the second precoding matrix, where the first precoding matrix is a precoding matrix with one row and one column, and the second precoding matrix is a precoding matrix with *Y* rows and one column.

With reference to the first aspect, the second aspect, or the third aspect, in a possible design, the third precoding matrix ***W***_{Z×1} satisfies the following structure: ${C}_{3} \left[\begin{matrix}{W}_{1 , r = 1} \\ {W}_{Y , r = 1}\end{matrix}\right]$

***W***_{1,*r*=1} represents the first precoding matrix, ***W***_{*Y,r*=1} represents the second precoding matrix, and *C*₃ represents a power coefficient.

In a possible design, the third precoding matrix is a fully-coherent precoding matrix.

With reference to the first aspect, the second aspect, or the third aspect, in a possible design, when *K* = 1, *Y* < *Z,* and the quantity of columns of the third precoding matrix is greater than 1 and less than or equal to *Z,* the third precoding matrix includes the first precoding matrix, the second precoding matrix, and a zero matrix, where the first precoding matrix and the second precoding matrix are submatrices corresponding to different row indexes of the third precoding matrix.

For example, that the first precoding matrix and the second precoding matrix are submatrices corresponding to different row indexes of the third precoding matrix may include: The first precoding matrix and the second precoding matrix are submatrices on a diagonal of the third precoding matrix.

With reference to the first aspect, the second aspect, or the third aspect, in a possible design, when the quantity of columns of the third precoding matrix is equal to *Z*, and *Z = Y* + 1, the first precoding matrix is a precoding matrix with one row and one column, and the second precoding matrix is a precoding matrix with *Y* rows and *Y* columns; or when the quantity of columns of the third precoding matrix is equal to *Y*, the first precoding matrix is a precoding matrix with one row and one column, and the second precoding matrix is a precoding matrix with *Y* rows and *Y -* 1 columns.

With reference to the first aspect, the second aspect, or the third aspect, in a possible design, when the quantity of columns of the third precoding matrix is equal to *Z*, the third precoding matrix **W**_{*Z*×*Z*} satisfies the following structure:
a first structure: ${C}_{4} \left[\begin{matrix}{W}_{1 , r = 1} & 0 \\ 0 & {W}_{Y , r = Y}\end{matrix}\right] ;$ or
a second structure: ${C}_{4} \left[\begin{matrix}{W}_{Y , r = Y} & 0 \\ 0 & {W}_{1 , r = 1}\end{matrix}\right]$

***W***_{1,*r*=1} represents the first precoding matrix, and may also be represented as ***W***_{1×1}; ***W**_{Y,r=Y}* represents the second precoding matrix, and may also be represented as ***W**_{Y×Y}*; and 0 represents the zero matrix. In the first structure, an upper right zero matrix is a matrix with 1 rows and *Y* columns, and may be represented as **0**_{1×*Y*}; and a lower left zero matrix is a matrix with *Y* rows and one column, and may be represented as **0**_{*Y*×1}. In the second structure, an upper right zero matrix is a matrix with *Y* rows and one column, and may be represented as **0**_{*Y*×1}; and a lower left zero matrix is a matrix with 1 rows and *Y* columns, and may be represented as **0**_{1×*Y*}. *C*₄ represents a power coefficient.

With reference to the first aspect, the second aspect, or the third aspect, in a possible design, when the quantity of columns of the third precoding matrix is equal to *Y*, the third precoding matrix ***W**_{Z×Y}* satisfies the following structure:
a first structure: ${C}_{5} \left[\begin{matrix}{W}_{1 , r = 1} & 0 \\ 0 & {W}_{Y , r = Y - 1}\end{matrix}\right] ;$ or
a second structure: ${C}_{5} \left[\begin{matrix}{W}_{Y , r = Y - 1} & 0 \\ 0 & {W}_{1 , r = 1}\end{matrix}\right]$

***W***_{1,*r*=1} represents the first precoding matrix, ***W***_{*Y,r=Y*-1} represents the second precoding matrix, and **0** represents the zero matrix. In the first structure, an upper right zero matrix is a matrix with 1 rows and *Y* - 1 columns, and may be represented as **0**_{1×*Y*-1}; and a lower left zero matrix is a matrix with *Y* rows and one column, and may be represented as **0**_{*Y*×1}. In the second structure, an upper right zero matrix is a matrix with *Y* rows and one column, and may be represented as **0**_{*Y*×1}; and a lower left zero matrix is a matrix with 1 rows and *Y* - 1 columns, and may be represented as **0**_{1×*Y*-1}. *C*₅ represents a power coefficient.

With reference to the first aspect, the second aspect, or the third aspect, in a possible design, when *K* = 1, *Y* < *Z*, and the quantity of columns of the third precoding matrix is greater than or equal to 1 and less than *Z,* the third precoding matrix includes the first precoding matrix and a zero matrix, or the third precoding matrix includes the second precoding matrix and a zero matrix.

With reference to the first aspect, the second aspect, or the third aspect, in a possible design, when the quantity of columns of the third precoding matrix is equal to *Y*, the second precoding matrix is a precoding matrix with *Y* rows and *Y* columns; or when the quantity of columns of the third precoding matrix is equal to 1, the first precoding matrix is a precoding matrix with one row and one column, or the second precoding matrix is a precoding matrix with *Y* rows and one column.

With reference to the first aspect, the second aspect, or the third aspect, in a possible design, when the quantity of columns of the third precoding matrix is equal to *Y*, the third precoding matrix ***W***_{*Z*×*Y*} satisfies the following structure: ${C}_{6} \left[\begin{matrix}0 \\ {W}_{Y , r = Y}\end{matrix}\right]$

***W**_{Y,r=Y}* represents the second precoding matrix, **0** represents the zero matrix, and the zero matrix is a matrix with *Z - Y* rows and *Y* columns, which may be represented as **0**_{(*Z*-*Y*)×*Y*}. *C*₆ represents a power coefficient.

With reference to the first aspect, the second aspect, or the third aspect, in a possible design, when the quantity of columns of the third precoding matrix is equal to 1, the third precoding matrix ***W***_{*Z*×1} satisfies the following structure: ${C}_{7} \left[\begin{matrix}{W}_{1 , r = 1} \\ 0\end{matrix}\right] ;$ or ${C}_{8} \left[\begin{matrix}0 \\ {W}_{Y , r = 1}\end{matrix}\right]$

***W***_{1,*r*=1} represents the first precoding matrix, *W*_{*Y,r*=1} represents the second precoding matrix, and 0 represents the zero matrix. In the first structure, the zero matrix is a matrix with Z - 1 rows and one column, and may be represented as **0**_{(*Z*-1)×1}. In the second structure, the zero matrix is a matrix with *Z - Y* rows and one column, and may be represented as **0**_{(*Z*-*Y*)×1}. *C*₇ and *C*₈ represent power coefficients.

In a possible design, the third precoding matrix is a partial-coherent precoding matrix.

With reference to the first aspect, the second aspect, or the third aspect, in a possible design, K = 1, and the first precoding matrix is located in the first codebook; and when the terminal supports 2-bit phase adjustment between coherent antenna groups corresponding to the *K* antenna ports and the *Y* antenna ports, a maximum quantity of precoding matrices in the first codebook is 4; when the terminal supports 1-bit phase adjustment between coherent antenna groups corresponding to the *K* antenna ports and the *Y* antenna ports, a maximum quantity of precoding matrices in the first codebook is 2; or when the terminal does not support phase adjustment between coherent antenna groups corresponding to the *K* antenna ports and the *Y* antenna ports, a maximum quantity of precoding matrices in the first codebook is 1.

With reference to the first aspect, the second aspect, or the third aspect, in a possible design, the first precoding matrix is located in the first codebook; and when the maximum quantity of precoding matrices in the first codebook is 4, the first codebook includes at least one of {1*, j,* -1*, -j*}; when the maximum quantity of precoding matrices in the first codebook is 2, the first codebook includes at least one of {1, -1}; or when the maximum quantity of precoding matrices in the first codebook is 1, the first codebook is {1}.

With reference to the first aspect, the second aspect, or the third aspect, in a possible design, the first information includes an index of the first precoding matrix in the first codebook.

With reference to the first aspect, the second aspect, or the third aspect, in a possible design, the first information includes a first value, and the first value indicates a demodulation reference signal DMRS port index. There is an association relationship between the index of the first precoding matrix in the first codebook and the DMRS port index; or there is an association relationship between the index of the first precoding matrix in the first codebook and the first value.

Based on this possible design, indication information of a DMRS port may be reused to indicate the first precoding matrix, so that signaling overheads can be reduced. In addition, the indication information of the DMRS port is information defined in a current standard, and using the information to indicate the first precoding matrix can improve compatibility and applicability of the solution in this application.

With reference to the first aspect, the second aspect, or the third aspect, in a possible design, the index n of the first precoding matrix in the first codebook satisfies the following relationship: $n = L mod N$

*L* represents the DMRS port index or the first value, *N* represents a quantity of precoding matrices in the first codebook, and *L* and *N* are positive integers.

With reference to the first aspect or the second aspect, in a possible design, the second information further indicates a quantity of PUSCH transmission layers corresponding to the second precoding matrix.

It should be noted that the foregoing merely describes a structure of the third precoding matrix by using examples, and does not constitute a limitation on the third precoding matrix. The third precoding matrix may also have another structure. For example, an order of rows and/or an order of columns in the foregoing structure may be changed to obtain a new third precoding matrix. In other words, the order of rows and/or the order of columns of the third precoding matrix are/is not limited in this application.

It should be noted that the third precoding matrix provided in this application may have a plurality of presentation forms. The foregoing merely describes a form of the third precoding matrix by using examples, and does not constitute a limitation on the form of the third precoding matrix.

According to a fourth aspect, a communication apparatus is provided. The apparatus is configured to implement any one of the foregoing aspects and the possible implementations thereof. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver, a transceiver machine, or a communication interface.

According to a fifth aspect, a communication apparatus is provided. The apparatus includes a processor and a memory. The memory is configured to store computer instructions. When the processor executes the instructions, the communication apparatus is enabled to perform the method according to any one of the foregoing aspects.

According to a sixth aspect, a communication apparatus is provided. The apparatus includes a processor and a communication interface. The communication interface is configured to communicate with a module outside the communication apparatus. The processor is configured to execute a computer program or instructions, to enable the communication apparatus to perform the method according to any one of the foregoing aspects.

According to a seventh aspect, a communication apparatus is provided. The apparatus includes at least one processor. The processor is configured to execute a computer program or instructions stored in a memory, to enable the communication apparatus to perform the method according to any one of the foregoing aspects. The memory may be coupled to the processor, or may be independent of the processor.

According to an eighth aspect, a communication apparatus is provided. The communication apparatus may be a terminal, may be a module or unit (for example, a chip, a chip system, or a circuit) that is in the terminal and that is in one-to-one correspondence with the method/operation/step/action described in the first aspect or the third aspect, or may be a module or unit that can be used together with the terminal. Alternatively, the communication apparatus may be a RAN node, may be a module or unit (for example, a chip, a chip system, or a circuit) that is in the RAN node and that is in one-to-one correspondence with the method/operation/step/action described in the second aspect, or may be a module or unit that can be used together with the RAN node.

According to a ninth aspect, a communication apparatus (for example, the communication apparatus may be a chip or a chip system) is provided. The communication apparatus includes a processor, configured to implement functions in any one of the foregoing aspects.

In a possible design, the communication apparatus includes a memory. The memory is configured to store necessary program instructions and necessary data.

In a possible design, when the apparatus is a chip system, the apparatus may include a chip, or may include a chip and another discrete component.

The communication apparatus in the third aspect to the ninth aspect may be the terminal in the first aspect or the third aspect, or an apparatus included in the terminal, for example, a chip or a chip system; or the communication apparatus may be the RAN node in the second aspect, or an apparatus included in the RAN node, for example, a chip or a chip system.

According to a tenth aspect, a computer-readable storage medium is provided. The computer-readable storage medium stores a computer program or instructions. When the computer program or the instructions are run on a communication apparatus, the communication apparatus is enabled to perform the method according to any one of the first aspect, the second aspect, or the third aspect.

According to an eleventh aspect, a computer program product including instructions is provided. When the computer program product runs on a communication apparatus, the communication apparatus is enabled to perform the method according to any one of the first aspect, the second aspect, or the third aspect.

According to a twelfth aspect, a communication system is provided. The communication system includes a terminal and a RAN node. The terminal is configured to perform the method according to any one of the first aspect or the third aspect and the possible designs thereof, and the RAN node is configured to perform the method according to any one of the second aspect and the possible designs thereof.

It may be understood that, when the communication apparatus according to any one of the third aspect to the ninth aspect is a chip, a sending action/function of the communication apparatus may be understood as outputting information, and a receiving action/function of the communication apparatus may be understood as inputting information.

For technical effect brought by any design of the third aspect to the twelfth aspect, refer to the technical effect brought by different designs in the first aspect, the second aspect, or the third aspect. Details are not described herein again.

### BRIEF DESCRIPTION OF DRAWINGS

FIG. 1 is a diagram of a structure of a communication system according to this application;
FIG. 2 is a schematic flowchart of a communication method according to this application;
FIG. 3 is a diagram of a structure of a communication apparatus according to this application;
FIG. 4 is a diagram of a structure of another communication apparatus according to this application; and
FIG. 5 is a diagram of a structure of still another communication apparatus according to this application.

### DESCRIPTION OF EMBODIMENTS

In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists. A and B may be singular or plural.

In the descriptions of this application, unless otherwise specified, "a plurality of' means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" are used to represent giving an example, an illustration, or a description. Any embodiment or design scheme described with "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in embodiments of this application. The execution sequences of the processes should be determined based on functions and internal logic of the processes, and should not constitute any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts of embodiments, reference may be made to each other. In implementations of this application, unless otherwise stated or there is a logic conflict, terms and/or descriptions in different implementations are consistent and may be mutually referenced, and technical features in different implementations may be combined based on an internal logical relationship thereof, to form a new implementation. The following implementations of this application are not intended to limit the protection scope of this application.

The technical solutions in embodiments of this application may be applied to various communication systems. The communication system may be a 3rd generation partnership project (3rd generation partnership project, 3GPP) communication system, for example, a 4th generation (4th generation, 4G) system such as a long term evolution (long term evolution, LTE) system, a 5th generation (5th generation, 5G) system such as a new radio (new radio, NR) system, an internet of vehicles (vehicle to everything, V2X) system, a system of LTE and 5G hybrid networking, a multiple-input multiple-output (multiple-input multiple-output, MIMO) system, a device-to-device (device-to-device, D2D) communication system, a machine-to-machine (machine-to-machine, M2M) communication system, an internet of things (Internet of Things, IoT), a non-terrestrial network (non-terrestrial network, NTN), or a future evolved communication system. The communication system may also be a non-3GPP communication system, for example, a wireless fidelity (wireless fidelity, Wi-Fi) system or a worldwide interoperability for microwave access (worldwide interoperability for microwave access, WiMAX) system. This is not limited.

The foregoing communication systems to which this application is applicable are merely examples for description, and communication systems and communication scenarios to which this application is applicable are not limited thereto. The communication systems and the communication scenarios provided in this application do not constitute any limitation on the solutions of this application. This is uniformly described herein. Details are not described below again.

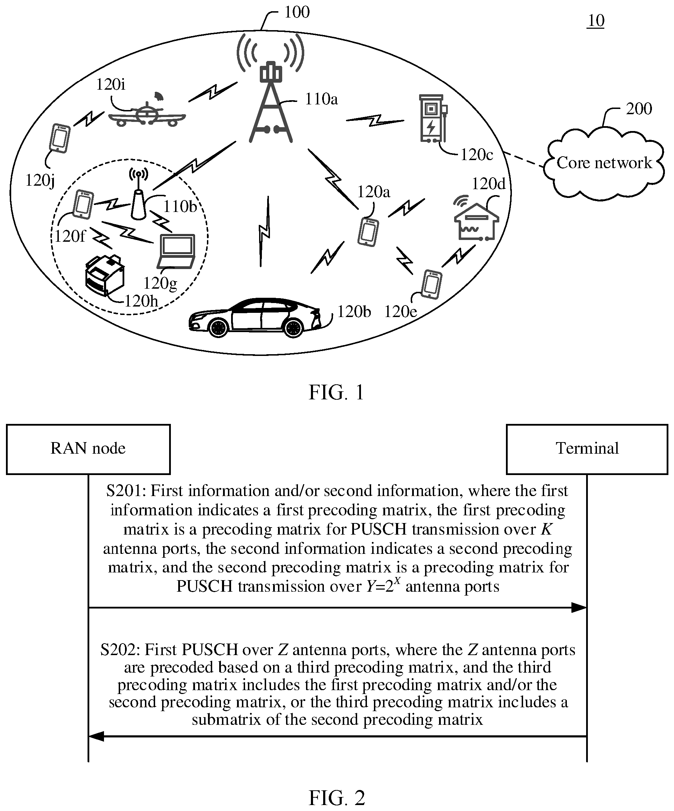

FIG. 1 is a diagram of a possible and non-limiting system. As shown in FIG. 1, the communication system 10 includes a radio access network (radio access network, RAN) 100. Further, the communication system includes a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a 3GPP-related cellular system, for example, a 4G or 5G mobile communication system, or a future-oriented evolved system (for example, a 6th generation (6th generation, 6G) mobile communication system). The RAN 100 may also be an open radio access network (open RAN, O-RAN or ORAN), a cloud radio access network (cloud radio access network, CRAN), or a Wi-Fi system. The RAN 100 may also be a communication system that integrates two or more of the foregoing systems.

The RAN node 110 may also be sometimes referred to as a network device, an access network device, a RAN entity, an access node, or the like, and forms a part of the communication system, to help the terminal implement radio access. A plurality of RAN nodes 110 in the communication system 10 may be nodes of a same type, or may be nodes of different types.

In some scenarios, roles of the RAN node 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station, BS), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may also be a server, a wearable device, a vehicle, a vehicle-mounted device, or the like. For example, a RAN node in a vehicle to everything (vehicle to everything, V2X) technology may be a roadside unit (roadside unit, RSU). All or some functions of the RAN node in this application may also be implemented by using a software function running on hardware, or may be implemented by using a virtualized function instantiated on a platform (for example, a cloud platform). The RAN node in this application may also be a logical node, a logical module, or software that can implement all or some functions of the RAN node.

In another possible scenario, a plurality of RAN nodes coordinate to assist the terminal in implementing radio access, and different RAN nodes each implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The terminal may be a user-side device with a wireless transceiver function, or may be a chip or a chip system disposed in the device. The terminal may also be referred to as user equipment (user equipment, UE), a terminal device, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, where the deployment includes indoor or outdoor, and handheld or vehicle-mounted deployment, may be deployed on water (for example, on a ship), or may be deployed in air (for example, on a plane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a compute device or another processing device connected to a wireless modem, a vehicle-mounted device, a wearable device (which may also be referred to as a wearable intelligent device), a tablet computer or a computer having a wireless transceiver function, a virtual reality (virtual reality, VR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle (uncrewed aerial vehicle, UAV) to uncrewed aerial vehicle (UAV to UAV, U2U) communication capability, or the like. The terminal device may be mobile or fixed. This is not specifically limited in this application.

It should be noted that the communication system described in embodiments of this application is intended to describe the technical solutions in embodiments of this application more clearly, but constitutes no limitation on the technical solutions provided in embodiments of this application. A person of ordinary skill in the art may learn that with evolution of a network architecture and emergence of new service scenarios, the technical solutions provided in embodiments of this application are also applicable to similar technical problems.

For ease of understanding the technical solutions in embodiments of this application, related technologies of this application are first briefly described below.

### 1. Coherence capabilities of a terminal device:

Fully-coherent (Fully-Coherent): All antenna ports of the terminal device can be used for coherent transmission.

Partial-coherent (Partial-Coherent): Antenna ports in a same coherent transmission group can be used for coherent transmission, and antenna ports in different coherent transmission groups cannot be used for coherent transmission. Each coherent transmission group includes some antenna ports.

Non-coherent (Non-Coherent): A plurality of antenna ports cannot be used for coherent transmission, in other words, no two antenna ports can be used for coherent transmission, and a same data stream can be sent only through one antenna port.

### 2. Codebook (codebook)-based physical uplink shared channel (physical uplink shared channel, PUSCH) transmission:

In codebook-based PUSCH transmission, a RAN node indicates a PUSCH transmission-related parameter to a terminal device by using downlink control information (downlink control information, DCI). The PUSCH transmission-related parameter includes an SRS resource indicator (SRS resource indicator, SRI), a transmit precoding matrix indicator (transmit precoding matrix indicator, TPMI), and a transmit rank indicator (transmit rank indicator, TRI). One TPMI corresponds to (or indicates) one precoding matrix. The TRI indicates a quantity of transmission layers (or referred to as a quantity of streams).

### 3. TPMI:

Precoding matrices may be classified, based on coherence modes, into a fully-coherent precoding matrix, a partial-coherent precoding matrix, and a non-coherent precoding matrix, which are respectively used for fully-coherent PUSCH transmission, partial-coherent PUSCH transmission, and non-coherent PUSCH transmission.

For example, the fully-coherent PUSCH transmission means that all PUSCH antenna ports can be used for transmission at a same data layer; the partial-coherent PUSCH transmission means that PUSCH antenna ports in a same coherent transmission group can be used for transmission at a same data layer; and the non-coherent PUSCH transmission means that only one PUSCH antenna port can be used for transmission at a same data layer.

For example, the fully-coherent precoding matrix does not include an element whose value is 0; the fully-coherent precoding matrix has an element whose value is 0; and the noncoherent precoding matrix has an element whose value is 0, and a quantity of non-zero elements in each row is 1.

Usually, a 3GPP protocol can define a precoding matrix set. 6.3.1.5 in the TS 38.211 Release 15 (release 15, R15) standard of NR is used as an example. Some precoding matrix sets defined in the standard are shown in Table 1 to Table 3.

**Table 1: Precoding matrix for single-layer transmission using two antenna ports**

| TPMI index (index) | Precoding matrix *W* (ordered from left to right in increasing order of TPMI indexes) | | | | | |
|---|---|---|---|---|---|---|
| 0 to 5 | $\frac{1}{\sqrt{2}} \left[\begin{matrix}1 \\ 0\end{matrix}\right]$ | $\frac{1}{\sqrt{2}} \left[\begin{matrix}0 \\ 1\end{matrix}\right]$ | $\frac{1}{\sqrt{2}} \left[\begin{matrix}1 \\ 1\end{matrix}\right]$ | $\frac{1}{\sqrt{2}} \left[\begin{matrix}1 \\ - 1\end{matrix}\right]$ | $\frac{1}{\sqrt{2}} \left[\begin{matrix}1 \\ j\end{matrix}\right]$ | $\frac{1}{\sqrt{2}} \left[\begin{matrix}1 \\ - j\end{matrix}\right]$ |

**Table 2: Precoding matrix for two-layer transmission using two antenna ports**

| TPMI index (index) | Precoding matrix *W* (ordered from left to right in increasing order of TPMI indexes) | | |
|---|---|---|---|
| 0 to 2 | $\frac{1}{\sqrt{2}} \left[\begin{matrix}1 & 0 \\ 0 & 1\end{matrix}\right]$ | $\frac{1}{2} \left[\begin{matrix}1 & 1 \\ 1 & - 1\end{matrix}\right]$ | $\frac{1}{2} \left[\begin{matrix}1 & 1 \\ j & - j\end{matrix}\right]$ |

**Table 3: Precoding matrix for three-layer transmission using four antenna ports**

| TPMI index (index) | Precoding matrix *W* (ordered from left to right in increasing order of TPMI indexes) | | | |
|---|---|---|---|---|
| 0 to 3 | $\frac{1}{2} \left[\begin{matrix}1 & 0 & 0 \\ 0 & 1 & 0 \\ 0 & 0 & 1 \\ 0 & 0 & 0\end{matrix}\right]$ | $\frac{1}{2} \left[\begin{matrix}1 & 0 & 0 \\ 0 & 1 & 0 \\ 1 & 0 & 0 \\ 0 & 0 & 1\end{matrix}\right]$ | $\frac{1}{2} \left[\begin{matrix}1 & 0 & 0 \\ 0 & 1 & 0 \\ - 1 & 0 & 0 \\ 0 & 0 & 1\end{matrix}\right]$ | $\frac{1}{2 \sqrt{3}} \left[\begin{matrix}1 & 1 & 1 \\ 1 & - 1 & 1 \\ 1 & 1 & - 1 \\ 1 & - 1 & - 1\end{matrix}\right]$ |
| 4 to 6 | $\frac{1}{2 \sqrt{3}} \left[\begin{matrix}1 & 1 & 1 \\ 1 & - 1 & 1 \\ j & j & - j \\ j & - j & - j\end{matrix}\right]$ | $\frac{1}{2 \sqrt{3}} \left[\begin{matrix}1 & 1 & 1 \\ - 1 & 1 & - 1 \\ 1 & 1 & - 1 \\ - 1 & 1 & 1\end{matrix}\right]$ | $\frac{1}{2 \sqrt{3}} \left[\begin{matrix}1 & 1 & 1 \\ - 1 & 1 & - 1 \\ j & j & - j \\ - j & j & j\end{matrix}\right]$ | |

For each precoding matrix, a row of the precoding matrix corresponds to a PUSCH antenna port, a quantity of rows is equal to a quantity of PUSCH antenna ports, a column of the precoding matrix corresponds to a PUSCH transmission layer, and a quantity of columns is equal to a quantity of PUSCH transmission layers.

As shown in Table 1, TPMI indexes 0 to 5 indicate six precoding matrices, precoding matrices indicated by TPMI indexes 0 and 1 are non-coherent precoding matrices, and precoding matrices indicated by TPMI indexes 2 to 5 are fully-coherent precoding matrices. In other words, the two PUSCH antenna ports can be used for simultaneous transmission of one data layer.

As shown in Table 2, TPMI indexes 0 to 2 indicate three precoding matrices, a precoding matrix indicated by the TPMI index 0 is a non-coherent precoding matrix, and precoding matrices indicated by indexes 1 and 2 are fully-coherent precoding matrices. In other words, the two PUSCH antenna ports can be used for simultaneous transmission of one data layer.

It should be noted that for transmission using two antenna ports, there is no partial-coherent precoding matrix. This is because a maximum quantity of antenna ports for PUSCH transmission is 2, in other words, each coherent antenna group includes a maximum of one PUSCH port. In this case, the partial-coherent precoding matrix is the same as the non-coherent precoding matrix.

As shown in Table 3, TPMI indexes 0 to 6 indicate seven precoding matrices, precoding matrices indicated by TPMI indexes 0 and 1 are non-coherent precoding matrices, a precoding matrix indicated by an index 2 is a partial-coherent precoding matrix, and precoding matrices indicated by indexes 3 to 6 are fully-coherent precoding matrices.

It should be noted that, the precoding matrices corresponding to the foregoing tables are merely used as examples with specific quantities of PUSCH ports and specific quantities of transmission layers, and another quantity of PUSCH ports and another quantity of transmission layers are not limited in the present invention.

### 4. TPMI indication:

Usually, when DCI is used to schedule a PUSCH, a *precoding information and number of layers* field in the DCI indicates a TPMI index and a quantity of transmission layers.

For example, in some scenarios, TPMI indexes and quantities of transmission layers that are respectively indicated by values of a *precoding information and number of layers* field included in a DCI format 0_1 are shown in Table 4 to Table 6.

**Table 4**

| Bit field mapped to index | *codebookSubset= fullyAndPartialAndNonCoherent* | Bit field mapped to index | *codebookSubset= partialAndNonCoherent* | Bit field mapped to index | *codebookSubset = nonCoherent* |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| ... | ... | ... | ... | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12 to 15 | Reserved |
| ... | ... | ... | ... | | |
| 19 | 1 layer: TPMI=11 | 19 | 1 layer: TPMI=11 | | |
| 20 | 2 layers: TPMI=6 | 20 | 2 layers: TPMI=6 | | |
| ... | ... | ... | ... | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layer: TPMI=12 | | | | |
| ... | ... | | | | |
| 47 | 1 layer: TPMI=27 | | | | |
| 48 | 2 layers: TPMI=14 | | | | |
| ... | ... | | | | |
| 55 | 2 layers: TPMI=21 | | | | |
| 56 | 3 layers: TPMI=3 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62 and 63 | Reserved | | | | |

Table 4 is an indication table in a scenario in which there are four antenna ports, a transform precoder is disabled (transform precoder is disabled), a maximum quantity of transmission layers *(maxRank)* is equal to 2, 3, or 4, and uplink full power transmission *(ul-FullPowerTransmission)* is not configured, is configured to a full power mode 2 (*fullpowerMode2*), or is configured to full power (*fullpower*)*.*

"Bit field mapped to index" may be understood as a value of the *precoding information and number of layers* field. The *codebookSubset* field is configured by a base station based on a coherence capability of a terminal. For example, if the capability of the terminal is partial-coherent and non-coherent (partialAndNonCoherent), the *codebookSubset* field cannot be configured to *fullyAndPartialAndNonCoherent*; if the capability of the terminal is non-coherent (nonCoherent), the *codebookSubset* field cannot be configured to *fullyAndPartialAndNonCoherent* or *partialAndNonCoherent*; and if a quantity of antenna ports configured by an SRS resource is 2, the *codebookSubset* field cannot be configured to *partialAndNonCoherent.*

Precoding information indicated by the *precoding information and number of layers* field is TPMI=y, and transmission layer information is x layers. For example, in a scenario of *codebookSubset=fullyAndPartialAndNonCoherent,* "bit field mapped to index=0" indicates "1 layer: TPMI=0", that is, a quantity of transmission layers is equal to 1, and TPMI=0. It may be understood that the index value of the TPMI herein is a TPMI index in a precoding matrix set defined by protocol, and a corresponding precoding matrix may be learned based on the TPMI index.

**Table 5**

| Bit field mapped to index | *codebookSubset= partialAndNonCoherent* | Bit field mapped to index | *codebookSubset= nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 1 layer: TPMI=13 | 10 | 1 layer: TPMI=13 |
| 11 | 2 layers: TPMI=6 | 11 | 2 layers: TPMI=6 |
| 12 | 1 layer: TPMI=4 | 12 to 15 | Reserved |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30 and 31 | Reserved | | |

Table 5 is an indication table in a scenario in which there are four antenna ports, a transform precoder is disabled (transform precoder is disabled), a maximum quantity of transmission layers (*maxRank*) is equal to 2, and uplink full power transmission (*ul-FullPowerTransmission*) is configured to a full power mode 1 (*fullpowerMode*)*.* For other descriptions, refer to related descriptions of Table 4. Details are not described herein again.

**Table 6**

| Bit field mapped to index | *codebookSubset= partialAndNonCoherent* | Bit field mapped to index | *codebookSubset= nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layers: TPMI=6 | 13 | 2 layers: TPMI=6 |
| 14 | 3 layers: TPMI=1 | 14 | 3 layers: TPMI=1 |
| 15 | 1 layer: TPMI=4 | 15 | Reserved |
| ... | ... | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| ... | ... | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |
| 36 to 63 | Reserved | | |

Table 6 is an indication table in a scenario in which there are four antenna ports, a transform precoder is disabled (transform precoder is disabled), a maximum quantity of transmission layers *(maxRank)* is equal to 3 or 4, and uplink full power transmission *(ul-FullPowerTransmission)* is configured to a full power mode *1* (*fullpowerMode1*)*.* For other descriptions, refer to related descriptions of Table 4. Details are not described herein again.

**Table 7**

| Bit field mapped to index | *codebookSubset= fullyAndPartialAndNonCoherent* | Bit field mapped to index | *codebookSubset= nonCoherent* |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | Reserved |
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9 to 15 | Reserved | | |

Table 7 is an indication table in a scenario in which there are two antenna ports, a transform precoder is disabled (transform precoder is disabled), a maximum quantity of transmission layers (*maxRank*) is equal to 2, and uplink full power transmission (*ul-FullPowerTransmission*) is not configured, is configured to a full power mode 2 (*fullpowerMode2*), or is configured to full power (*fullpower*)*.* For other descriptions, refer to related descriptions of Table 4. Details are not described herein again.

### 5. Demodulation reference signal (demodulation reference signal, DMRS) port indication:

A DMRS is a reference signal used by a receive end to perform equivalent channel estimation. In a PUSCH transmission process, a base station needs to allocate a DMRS port to a terminal; and the terminal sends a DMRS pilot signal based on the allocated DMRS port and according to a DMRS signal generation method and a time-frequency resource mapping rule that are defined by protocol, for the base station to perform uplink channel estimation.

Currently, the base station performs DMRS port-related configuration in a manner of semi-statically configuring a DMRS type and a maximum length by using higher layer signaling, and dynamically indicating a DMRS port index by using DCI.

For example, at least one of the following is configured by using higher layer signaling DMRS-DownlinkConfig: a DMRS type (Type 1 or Type 2), a maximum quantity of symbols occupied by a DMRS (a single-symbol DMRS or a double-symbol DMRS), a sequence generation factor corresponding to the DMRS, a related configuration of a phase tracking reference signal, and whether a DMRS enhancement feature is enabled.

Further, the DMRS port index is indicated by using an antenna port (Antenna port) field in the DCI signaling. An NR protocol defines different antenna port indication tables for different DMRS types, maximum quantities of symbols, and quantities of transmission layers.

For example, Table 8 is an antenna port indication table in a case in which a DMRS type is the type 1, a maximum quantity of symbols is equal to 1, and a quantity of transmission layers is equal to 1; Table 9 is an antenna port indication table in a case in which a DMRS type is the type 1, a maximum quantity of symbols is equal to 2, and a quantity of transmission layers is equal to 2; Table 10 is an antenna port indication table in a case in which a DMRS type is the type 2, a maximum quantity of symbols is equal to 1, and a quantity of transmission layers is equal to 3; and Table 11 is an antenna port indication table in a case in which a DMRS type is the type 2, a maximum quantity of symbols is equal to 2, and a quantity of transmission layers is equal to 4.

**Table 8**

| Value (value) | Quantity of DMRS CDM groups without data (Number of DMRS CDM group(s) without data) | DMRS port (DMRS port(s)) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 and 7 | Reserved | Reserved |

"Value (value)" represents a value of an antenna port (Antenna port) field. CDM represents code division multiplexing (code division multiplexing, CDM).

**Table 9**

| Value (value) | Quantity of DMRS CDM groups without data (Number of DMRS CDM group(s) without data) | DMRS port (DMRS port(s)) | Quantity of frontloaded symbols (Number of front-load symbols) |
|---|---|---|---|
| 0 | 1 | 0, 1 | 1 |
| 1 | 2 | 0, 1 | 1 |
| 2 | 2 | 2, 3 | 1 |
| 3 | 2 | 0, 2 | 1 |
| 4 | 2 | 0, 1 | 2 |
| 5 | 2 | 2, 3 | 2 |
| 6 | 2 | 4, 5 | 2 |
| 7 | 2 | 6, 7 | 2 |
| 8 | 2 | 0, 4 | 2 |
| 9 | 2 | 2, 6 | 2 |
| 10 to 15 | Reserved | Reserved | Reserved |

**Table 10**

| Value (value) | Quantity of DMRS CDM groups without data (Number of DMRS CDM group(s) without data) | DMRS port (DMRS port(s)) |
|---|---|---|
| 0 | 2 | 0 to 2 |
| 1 | 3 | 0 to 2 |
| 2 | 3 | 3 to 5 |
| 3 to 15 | Reserved | Reserved |

**Table 11**

| Value (value) | Quantity of DMRS CDM groups without data (Number of DMRS CDM group(s) without data) | DMRS port (DMRS port(s)) | Quantity of frontloaded symbols (Number of front-load symbols) |
|---|---|---|---|
| 0 | 2 | 0 to 3 | 1 |
| 1 | 3 | 0 to 3 | 1 |
| 2 | 3 | 0, 1, 6, 7 | 2 |
| 3 | 3 | 2, 3, 8, 9 | 2 |
| 4 | 3 | 4, 5, 10, 11 | 2 |
| 5 to 31 | Reserved | Reserved | Reserved |

### 6. Eight-antenna-port (8Tx) PUSCH transmission:

The 3GPP Release 18 (R18) standard designs a precoding matrix in a codebook-based eight-antenna-port PUSCH transmission scenario. For example, in a fully-coherent transmission mode, a precoding matrix satisfies the following structure: $\frac{1}{\sqrt{{\sum }_{x = 1}^{Nt} {\sum }_{y = 1}^{NL} {{a}^{2}}_{x , y}}} \left[\begin{matrix}{a}_{1 , 1} & {a}_{1 , 2} & {a}_{1 , 3} & {a}_{1 , 4} & {a}_{1 , 5} & {a}_{1 , 6} & {a}_{1 , 7} & {a}_{1 , 8} \\ {a}_{2 , 1} & {a}_{2 , 2} & {a}_{2 , 3} & {a}_{2 , 4} & {a}_{2 , 5} & {a}_{2 , 6} & {a}_{2 , 7} & {a}_{2 , 8} \\ {a}_{3 , 1} & {a}_{3 , 2} & {a}_{3 , 3} & {a}_{3 , 4} & {a}_{3 , 5} & {a}_{3 , 6} & {a}_{3 , 7} & {a}_{3 , 8} \\ {a}_{4 , 1} & {a}_{4 , 2} & {a}_{4 , 3} & {a}_{4 , 4} & {a}_{4 , 5} & {a}_{4 , 6} & {a}_{4 , 7} & {a}_{4 , 8} \\ {a}_{5 , 1} & {a}_{5 , 2} & {a}_{5 , 3} & {a}_{5 , 4} & {a}_{5 , 5} & {a}_{5 , 6} & {a}_{5 , 7} & {a}_{5 , 8} \\ {a}_{6 , 1} & {a}_{6 , 2} & {a}_{6 , 3} & {a}_{6 , 4} & {a}_{6 , 5} & {a}_{6 , 6} & {a}_{6 , 7} & {a}_{6 , 8} \\ {a}_{7 , 1} & {a}_{7 , 2} & {a}_{7 , 3} & {a}_{7 , 4} & {a}_{7 , 5} & {a}_{7 , 6} & {a}_{7 , 7} & {a}_{7 , 8} \\ {a}_{8 , 1} & {a}_{8 , 2} & {a}_{8 , 3} & {a}_{8 , 4} & {a}_{8 , 5} & {a}_{8 , 6} & {a}_{8 , 7} & {a}_{8 , 8}\end{matrix}\right]$

*a_{x,y}* represents an element in an *x*^{th} row and a yth column of the precoding matrix. *a_{x,y}* may be a real number whose modulus is 1. For example, a value may be one of {1, -1*, j,* -*j*}. $\frac{1}{\sqrt{{\sum }_{x = 1}^{Nt} {\sum }_{y = 1}^{NL} {{a}^{2}}_{x , y}}}$ represents a power coefficient of the precoding matrix, *Nt* represents a quantity of rows of the precoding matrix, and *NL* represents a quantity of columns of the precoding matrix. It can be learned that in the fully-coherent transmission mode, the precoding matrix does not have an element whose value is 0.

For example, in a partial-coherent transmission mode, a precoding matrix satisfies the following structure: $\frac{1}{\sqrt{{\sum }_{x = 1}^{Nt} {\sum }_{y = 1}^{NL} {{a}^{2}}_{x , y}}} \left[\begin{matrix}{a}_{1 , 1} & {a}_{1 , 2} & {a}_{1 , 3} & {a}_{1 , 4} & 0 & 0 & 0 & 0 \\ {a}_{2 , 1} & {a}_{2 , 2} & {a}_{2 , 3} & {a}_{2 , 4} & 0 & 0 & 0 & 0 \\ {a}_{3 , 1} & {a}_{3 , 2} & {a}_{3 , 3} & {a}_{3 , 4} & 0 & 0 & 0 & 0 \\ {a}_{4 , 1} & {a}_{4 , 2} & {a}_{4 , 3} & {a}_{4 , 4} & 0 & 0 & 0 & 0 \\ 0 & 0 & 0 & 0 & {a}_{5 , 5} & {a}_{5 , 6} & {a}_{5 , 7} & {a}_{5 , 8} \\ 0 & 0 & 0 & 0 & {a}_{6 , 5} & {a}_{6 , 6} & {a}_{6 , 7} & {a}_{6 , 8} \\ 0 & 0 & 0 & 0 & {a}_{7 , 5} & {a}_{7 , 6} & {a}_{7 , 7} & {a}_{7 , 8} \\ 0 & 0 & 0 & 0 & {a}_{8 , 5} & {a}_{8 , 6} & {a}_{8 , 7} & {a}_{8 , 8}\end{matrix}\right]$

The precoding matrix in the partial-coherent transmission mode has an element whose value is 0. For other descriptions, refer to related descriptions of the precoding matrix in the fully-coherent transmission mode. Details are not described.

For example, in a non-coherent transmission mode, a precoding matrix satisfies the following structure: $\frac{1}{\sqrt{{\sum }_{x = 1}^{Nt} {\sum }_{y = 1}^{NL} {{a}^{2}}_{x , y}}} \left[\begin{matrix}{a}_{1 , 1} & 0 & 0 & 0 & 0 & 0 & 0 & 0 \\ 0 & {a}_{2 , 2} & 0 & 0 & 0 & 0 & 0 & 0 \\ 0 & 0 & {a}_{3 , 3} & 0 & 0 & 0 & 0 & 0 \\ 0 & 0 & 0 & {a}_{4 , 4} & 0 & 0 & 0 & 0 \\ 0 & 0 & 0 & 0 & {a}_{5 , 5} & 0 & 0 & 0 \\ 0 & 0 & 0 & 0 & 0 & {a}_{6 , 6} & 0 & 0 \\ 0 & 0 & 0 & 0 & 0 & 0 & {a}_{7 , 7} & 0 \\ 0 & 0 & 0 & 0 & 0 & 0 & 0 & {a}_{8 , 8}\end{matrix}\right]$

The precoding matrix in the non-coherent transmission mode has an element whose value is 0, and a quantity of non-zero elements in each row is 1. For other descriptions, refer to related descriptions of the precoding matrix in the fully-coherent transmission mode. Details are not described.

For the foregoing precoding matrices in the fully-coherent, partial-coherent, and noncoherent transmission modes, an order of columns in the precoding matrix is not limited. In other words, the columns in the precoding matrix may be interchanged in order.

The precoding matrix in the codebook-based eight-antenna-port PUSCH transmission scenario is designed in the R18 standard. However, commercial terminals in existing networks are limited by constraints such as cost and complexity. As a result, a terminal device with a large quantity of antennas is usually in the form of fixed wireless access (fixed wireless access, FWA) devices, customer premises equipment (customer premises equipment, CPE), or similar devices. For more prevalent terminals in existing networks, such as commercial mobile phones, a quantity of uplink transmit antennas is usually small, for example, usually less than four.

Based on this, this application provides a communication method. When transmitting a PUSCH over Z antenna ports, a terminal may precode the Z antenna ports based on a third precoding matrix. The third precoding matrix includes a first precoding matrix and/or a second precoding matrix, or the third precoding matrix includes a submatrix of the second precoding matrix. The first precoding matrix is a precoding matrix for PUSCH transmission over K antenna ports. The second precoding matrix is a precoding matrix for PUSCH transmission over *Y* antenna ports, *Y = 2^{X},* and *X* is a positive integer.

In other words, based on this solution, a precoding matrix for PUSCH transmission over the Z antenna ports may be obtained based on the precoding matrix for PUSCH transmission over the *K* antenna ports and/or the precoding matrix for PUSCH transmission over the *Y =* 2*^{X}* antenna ports to enable PUSCH transmission over the *Z* antenna ports. When *Z* is less than 4, the method is applicable to prevalent terminals with a small quantity of uplink transmit antennas, thereby reducing terminal costs.

A precoding matrix (referred to as a third precoding matrix) is provided in the communication method in this application. The following first describes the third precoding matrix provided in this application.

The third precoding matrix includes a first precoding matrix and/or a second precoding matrix; or the third precoding matrix includes a submatrix of the second precoding matrix.

It may be understood that, in embodiments of this application, a row of a precoding matrix corresponds to an antenna port, a quantity of rows of the precoding matrix is equal to a quantity of antenna ports, a column of the precoding matrix corresponds to a transmission layer, and a quantity of columns of the precoding matrix may be equal to a quantity of transmission layers. In addition, the precoding matrix may also be referred to as precoding, a precoder, a TPMI, or a codeword, which may be used interchangeably.

The first precoding matrix is a precoding matrix for PUSCH transmission over *K* antenna ports, and *K* is a positive integer. For example, *K* is equal to 1 or 2. In an example, the first precoding matrix is a matrix with *K* rows and *R*₁ columns, and *R*₁ is a positive integer. For example, *R*₁ = 1. Certainly, *K* and *R*₁ may also have other values. This is not specifically limited in this application.

In a possible implementation, when *K* = 1 and *R*₁ = 1, the first precoding matrix may be one of {1, *j,* -1, *-j*}*.*

In another possible implementation, when *K* = 2 and *R*₁ = 1, the first precoding matrix may be a precoding matrix for performing one-layer transmission by using two antenna ports, that is, a matrix with two rows and one column. For example, the first precoding matrix may be a fully-coherent precoding matrix shown in Table 1, that is, one of the precoding matrices indicated by the TPMI indexes 2 to 5. Alternatively, the first precoding matrix may be a part, other than a power coefficient, of one of the precoding matrices indicated by the TPMI indexes 2 to 5 shown in Table 1. For example, the first precoding matrix may be one of precoding matrices in Table 12. In Table 12, the index of the precoding matrix is the same as that in Table 1. Certainly, the index of the precoding matrix may also be renumbered. For example, TPMI indexes corresponding to the precoding matrices shown in Table 12 are respectively 0 to 3. In addition, the TPMI index in Table 12 may also be referred to as an index or a number, which may be used interchangeably. Further, the first precoding matrix may also be a non-coherent precoding matrix shown in Table 1, that is, one of the precoding matrices indicated by the TPMI indexes 0 and 1.

**Table 12**

| TPMI index (index) | Precoding matrix *W* (ordered from left to right in increasing order of TPMI indexes) | | | |
|---|---|---|---|---|
| 2 to 5 | $\left[\begin{matrix}1 \\ 1\end{matrix}\right]$ | $\left[\begin{matrix}1 \\ - 1\end{matrix}\right]$ | $\left[\begin{matrix}1 \\ j\end{matrix}\right]$ | $\left[\begin{matrix}1 \\ - j\end{matrix}\right]$ |

Optionally, the first precoding matrix is located in a first codebook. For example, the first codebook may also be referred to as a first precoding matrix set, a first precoding set, a first precoder set, a first TPMI index set, a first value of a phase adjustment capability between coherent antenna groups, or the like. In addition, the first codebook may have another name. This is not specifically limited in this application.

For example, the first codebook represents (or describes) a set of precoding matrix matrices available for selection. A storage form of the first codebook may be similar to the form shown in Table 1 to Table 3. That is, one TPMI index corresponds to one precoding matrix. Certainly, the first codebook may also have another definition manner and implementation form. A specific definition manner and an implementation form of the first codebook are not limited in this application. This application protects a specific precoding matrix, and any form including the precoding matrix may be used as an alternative name for the first codebook, or may be referred to as the first codebook.

In a possible implementation, when *K* = 1, a maximum quantity of precoding matrices in the first codebook may be 4, 2, or 1. For example, when the maximum quantity of precoding matrices in the first codebook is 4, the first codebook includes at least one of {1, *j,* -1, -*j*}; when the maximum quantity of precoding matrices in the first codebook is 2, the first codebook includes at least one of {1, -1}; or when the maximum quantity of precoding matrices in the first codebook is 1, the first codebook is {1}. That is, the first codebook is a subset of {1*, j,* -1*, -j*}*.*

For example, the maximum quantity of precoding matrices in the first codebook and a precoding matrix specifically included in the first codebook may be configured by a RAN node, or may be predefined by protocol. This is not specifically limited in this application.

In a possible implementation, when *K* = 1, the maximum quantity of precoding matrices in the first codebook is related to a phase adjustment capability of the terminal. For example, when the terminal supports 2-bit phase adjustment between coherent antenna groups corresponding to the *K* antenna ports and the *Y* antenna ports, the maximum quantity of precoding matrices in the first codebook is 4; when the terminal supports 1-bit phase adjustment between coherent antenna groups corresponding to the *K* antenna ports and the *Y* antenna ports, the maximum quantity of precoding matrices in the first codebook is 2; or when the terminal does not support phase adjustment between coherent antenna groups corresponding to the *K* antenna ports and the *Y* antenna ports, the maximum quantity of precoding matrices in the first codebook is 1. The *K* antenna ports are the *K* antenna ports corresponding to the first precoding matrix, and the *Y* antenna ports are the *Y* antenna ports corresponding to the second precoding matrix. That is, the first precoding matrix may be understood as representing a phase between the coherent antenna groups corresponding to the *K* antenna ports and the *Y* antenna ports.

For example, the terminal may report its capability to the RAN node, and the RAN node configures, based on the capability, the maximum quantity of precoding matrices in the first codebook and/or the precoding matrix specifically included in the first codebook.

In another possible implementation, when *K* = 2, the first codebook may be a set of precoding matrices indicated by the TPMI indexes 2 to 5 shown in Table 1 or Table 12. Alternatively, the first codebook may be a set of precoding matrices indicated by the TPMI indexes 2 to 5 shown in Table 1.

The second precoding is a precoding matrix for PUSCH transmission over *Y* antenna ports, *Y =* 2*^{X},* and *X* is a positive integer. For example, *X* is equal to 1 or 2, and correspondingly, *Y* is equal to 2 or 4. For example, the second precoding matrix is a matrix with *Y* rows and *R*₂ columns, and *R*₂ is a positive integer. For example, *R*₂ is equal to 1, 2, or 3. Certainly, *X, Y,* and *R*₂ may also have other values. This is not specifically limited in this application.

In a possible implementation, when *X* = 1, *Y* = 2, and *R*₂ = 1, the second precoding matrix may be a precoding matrix for performing one-layer transmission by using two antenna ports, that is, a matrix with two rows and one column. For example, the second precoding matrix may be a fully-coherent precoding matrix shown in Table 1, that is, one of the precoding matrices indicated by the TPMI indexes 2 to 5. Alternatively, the second precoding matrix may be a part, other than a power coefficient, of one of the precoding matrices indicated by the TPMI indexes 2 to 5 shown in Table 1, that is, one of the precoding matrices shown in Table 12. Alternatively, the second precoding matrix may be one of precoding matrices indicated by the TPMI indexes 0 to 5 shown in Table 1.

In another possible implementation, when *X* = 1, *Y* = 2, and *R*₂ = 2, the second precoding matrix may be a precoding matrix for performing two-layer transmission by using two antenna ports, that is, a matrix with two rows and two columns. For example, the second precoding matrix may be a fully-coherent precoding matrix shown in Table 2, that is, one of the precoding matrices indicated by the TPMI indexes 1 and 2. Alternatively, the second precoding matrix may be one of the precoding matrices indicated by the TPMI indexes 0 to 2 shown in Table 2. Alternatively, the second precoding matrix may be a part, other than a power coefficient, of one of the precoding matrices indicated by the TPMI indexes 1 and 2 shown in Table 2. For example, the second precoding matrix may be one of precoding matrices in Table 13. In Table 13, the index of the precoding matrix is the same as that in Table 2. Certainly, the index of the precoding matrix may also be renumbered. For example, TPMI indexes corresponding to the precoding matrices shown in Table 13 are respectively 0 and 1. In addition, the TPMI index in Table 13 may also be referred to as an index or a number, which may be used interchangeably.

**Table 13**

| TPMI index (index) | Precoding matrix *W* (ordered from left to right in increasing order of TPMI indexes) | |
|---|---|---|
| 1 and 2 | $\left[\begin{matrix}1 & 1 \\ 1 & - 1\end{matrix}\right]$ | $\left[\begin{matrix}1 & 1 \\ j & - j\end{matrix}\right]$ |

In still another possible implementation, when *X = 2, Y =* 4, and *R*₂ = 3, the second precoding matrix may be a precoding matrix for performing three-layer transmission by using four antenna ports, that is, a matrix with four rows and three columns. For example, the second precoding matrix may be a fully-coherent precoding matrix shown in Table 3, that is, one of the precoding matrices indicated by the TPMI indexes 3 to 6. Alternatively, the second precoding matrix may be one of the precoding matrices indicated by the TPMI indexes 0 to 6 shown in Table 3. Alternatively, the second precoding matrix may be a part, other than a power coefficient, of one of the precoding matrices indicated by the TPMI indexes 3 to 6 shown in Table 3. For example, the second precoding matrix may be one of precoding matrices in Table 14. In Table 14, the index of the precoding matrix is the same as that in Table 3. Certainly, the index of the precoding matrix may also be renumbered. For example, TPMI indexes corresponding to the precoding matrices shown in Table 14 are respectively 0 to 3. In addition, the TPMI index in Table 14 may also be referred to as an index or a number, which may be used interchangeably.

**Table 14**

| TPMI index (index) | Precoding matrix *W* (ordered from left to right in increasing order of TPMI indexes) | | | |
|---|---|---|---|---|
| 3 to 6 | $\left[\begin{matrix}1 & 1 & 1 \\ 1 & - 1 & 1 \\ 1 & 1 & - 1 \\ 1 & - 1 & - 1\end{matrix}\right]$ | $\left[\begin{matrix}1 & 1 & 1 \\ 1 & - 1 & 1 \\ j & j & - j \\ j & - j & - j\end{matrix}\right]$ | $\left[\begin{matrix}1 & 1 & 1 \\ - 1 & 1 & - 1 \\ 1 & 1 & - 1 \\ - 1 & 1 & 1\end{matrix}\right]$ | $\left[\begin{matrix}1 & 1 & 1 \\ - 1 & 1 & - 1 \\ j & j & - j \\ - j & j & j\end{matrix}\right]$ |

The third precoding matrix is a matrix with *Z* rows and *R*₃ columns, and *Z* and *R*₃ are positive integers. For example, *Z* is equal to 3, and *R*₃ is equal to 1, 2, or 3. Certainly, *Z* and *R*₃ may also have other values. For example, *Z* is equal to 5, and *R*₃ is equal to 4 or 5. This is not specifically limited in this application.

*Z > Y,* or *Z < Y.* That is, a quantity of rows of the third precoding matrix may be greater than or less than a quantity of rows of the second precoding matrix.

In a possible implementation, when *Y* > *Z*, and a quantity of columns of the third precoding matrix is equal to *Z* (that is, *R*₃ = *Z*), the third precoding matrix includes the submatrix of the second precoding matrix.

Optionally, the submatrix of the second precoding matrix may include *Z* rows of the second precoding matrix, in other words, the submatrix corresponds to the *Z* rows of the second precoding matrix. That is, the third precoding matrix includes the *Z* rows in the second precoding matrix.

It should be noted that, in embodiments of this application, a row of the precoding matrix may be all column elements in the row of the precoding matrix. For example, if the precoding matrix is a matrix with four rows and three columns, and an element in an *x*^{th} row and a *y*^{th} column is represented as *a_{x,y},* the *x*^{th} row of the precoding matrix may be {*a*_{*x,*1}*, a*_{*x,*2}*, a*_{*x,*3}}*.*

Optionally, in this possible implementation, the third precoding matrix corresponds to a PUSCH fully-coherent transmission mode or fully-coherent transmission codebook, or the third precoding matrix is a fully-coherent precoding matrix.

In another possible implementation, when *Y* < *Z,* the third precoding matrix includes the first precoding matrix and/or the second precoding matrix.

Optionally, in this possible implementation, the third precoding matrix corresponds to a PUSCH fully-coherent transmission mode or fully-coherent transmission codebook, or the third precoding matrix is a fully-coherent precoding matrix; or the third precoding matrix corresponds to a PUSCH partial-coherent transmission mode or partial-coherent transmission codebook, or the third precoding matrix is a partial-coherent precoding matrix. The foregoing provides overall descriptions of the third precoding matrix. The following describes in detail specific implementations of the third precoding matrix in various cases.

Case 1: When *Y* > Z, the quantity of columns of the third precoding matrix is equal to *A,* and *A* ≤ Z, the third precoding matrix satisfies the following structure: ${C}_{1} \left[{W}_{Y , r = A}\left(\left[{y}_{1},{y}_{2},…,{y}_{Z}\right],:\right)\right]$

The third precoding matrix is a matrix with *Z* rows and *A* columns. *C*₁ represents a power coefficient. ***W***_{*Y,r*=A} represents the second precoding matrix with *Y* rows and *A* columns, that is, *R*₂ = *A. y*₁*, y*₂, ... *, y_{Z}* ∈ [1*, Y*], *y*₁*, y*₂*, ... , and y_{Z}* are different from each other, and *y*₁*, y*₂*, ... , and y_{z}* represent Z values. [*y*₁*, y₂*, *..., y_{Z}*] represents a (*y*₁)^{th} row, a (*y*₂)^{th} row, ..., and a (*y_{Z}*)^{th} row, and : represents all columns. ***W**_{Y,r=A}*([*y*₁*, y*₂, *... , y_{Z}*], : ) represents the (*y*₁)^{th} row, the (*y*₂)^{th} row, ..., and the (*y*_{Z})^{th} row of the second precoding matrix with the *Y* rows and the *A* columns. For example, when Z = 3, *y_{Z}* = *y*₃*,* and *y*₁*, y*₂, *and y_{Z}* may have the following four types of values: *y*₁ *=* 1, *y*₂ *= 2, and y*₃ = 3; *y*₁ = 1, *y*₂ *=* 2*, and y*₃ *= 4; y*₁ = 1, *y*₂ = 3, *and y*₃ = 4; or *y*₁ = 2, *y*₂ *=* 3, *and y*₃ = 4. In other words, the third precoding matrix may be of the following four types:
a type 1: *C*₁[***W**_{Y,r=A}*([1,2,3], :)], that is, the third precoding matrix includes a 1^{st} row, a 2^{nd} row, and a 3^{rd} row of the second precoding matrix;
a type 2: *C*₁[***W**_{Y,r=A}*([1,2,4],: )], that is, the third precoding matrix includes a 1^{st} row, a 2^{nd} row, and a 4^{th} row of the second precoding matrix;
a type 3: *C*₁[***W**_{Y,r=A}*([1,3,4], : )], that is, the third precoding matrix includes a 1^{st} row, a 3^{rd} row, and a 4^{th} row of the second precoding matrix; and
a type 4: *C*₁[***W**_{Y,r=A}*([2,3,4]*,* : )], that is, the third precoding matrix includes a 2^{nd} row, a 3^{rd} row, and a 4^{th} row of the second precoding matrix.

For example, when *Y =* 4, *and A* = *Z* = 3, the second precoding matrix is a matrix with four rows and three columns, and the second precoding matrix may be one of the precoding matrices indicated by the TPMI indexes 3 to 6 shown in Table 3 or Table 14. The third precoding matrix includes three rows in the matrix with four rows and three columns, that is, the third precoding matrix is a matrix with three rows and three columns.

For example, when *Y* = 4, *A* = *Z* = 3, and the second precoding matrix is one of the precoding matrices indicated by the TPMI indexes 3 to 6 shown in Table 14, *C*₁ = 1/3. In other words, the third precoding matrix may be of the following four types:
a type 1: $\frac{1}{3} \left[{W}_{4 , r = 3}\left(\left[1, 2, 3\right],:\right)\right] ;$
a type 2: $\frac{1}{3} \left[{W}_{4 , r = 3}\left(\left[1, 2, 4\right],:\right)\right] ;$
a type 3: $\frac{1}{3} \left[{W}_{4 , r = 3}\left(\left[1, 3, 4\right],:\right)\right] ;$ and
a type 4: $\frac{1}{3} \left[{W}_{4 , r = 3}\left(\left[2, 3, 4\right],:\right)\right] .$

Case 2: When *Y* < *Z*, and the quantity of columns of the third precoding matrix is greater than 1 and less than *Z,* the third precoding matrix includes a transposed matrix of the first precoding matrix and the second precoding matrix.

For example, when *Y* = 2, *Z* = 3, and the quantity of columns of the third precoding matrix is greater than 1 and less than 3, the third precoding matrix includes a transposed matrix of the first precoding matrix and the second precoding matrix.

In a possible implementation, when the quantity of columns of the third precoding matrix is equal to 2, *K* = 2, the first precoding matrix is a precoding matrix with two rows and *Q* columns, that is, *R*₁ = Q, and the second precoding matrix is a precoding matrix with *Y* rows and two columns, that is, *R*₂ = 2. *Q + Y = Z.*

For example, in the case 2, the third precoding matrix satisfies the following structure: ${C}_{2} \left[\begin{matrix}{W}_{2 , r = Q}^{T} \\ {W}_{Y , r = 2}\end{matrix}\right]$${W}_{2 , r = Q}^{T}$ represents the transposed matrix of the first precoding matrix, ***W***_{*Y,r=*2} represents the second precoding matrix, and *C*₂ represents a power coefficient.

For example, when *Y = 2, Z* = 3, *K =* 2, and *Q* = 1, the first precoding matrix is a matrix with two rows and one column, and the second precoding matrix is a matrix with two rows and two columns. For example, the first precoding matrix may be one of the precoding matrices indicated by the TPMI indexes 2 to 5 shown in Table 1 or Table 12, and the second precoding matrix may be one of the precoding matrices indicated by the TPMI indexes 1 and 2 shown in Table 2 or Table 13.

For example, when *Y = 2,* Z = 3, *K = 2, Q* = 1, the first precoding matrix is one of the precoding matrices indicated by the TPMI indexes 2 to 5 shown in Table 12, and the second precoding matrix is one of the precoding matrices indicated by the TPMI indexes 1 and 2 shown in Table 13, ${C}_{2} = 1 / \sqrt{6}$. That is, the third precoding matrix satisfies the following structure: $\frac{1}{\sqrt{6}} \left[\begin{matrix}{W}_{2 , r = 1}^{T} \\ {W}_{2 , r = 2}\end{matrix}\right]$

Case 3: When *Y* < *Z,* and the quantity of columns of the third precoding matrix is equal to 1, the third precoding matrix includes the first precoding matrix and the second precoding matrix.

For example, when *Y* = 2, *Z* = 3, and the quantity of columns of the third precoding matrix is equal to 1, the third precoding matrix includes the first precoding matrix and the second precoding matrix.

*K* = 1, that is, the first precoding matrix is a precoding matrix with one row and one column, that is, *R*₁ = 1, and the second precoding matrix is a precoding matrix with *Y* rows and one column, that is, *R*₂ = 1. For example, in the case 3, the third precoding matrix satisfies the following structure: ${C}_{3} \left[\begin{matrix}{W}_{1 , r = 1} \\ {W}_{Y , r = 1}\end{matrix}\right]$

***W***_{1,*r*=1} represents the first precoding matrix, ***W***_{*Y,r*=1} represents the second precoding matrix, and *C*₃ represents a power coefficient.

For example, when *Y =* 2, *Z* = 3, and *K =* 1, the first precoding matrix is a matrix with one row and one column, and the second precoding matrix is a matrix with two rows and one column. For example, the first precoding matrix is one matrix in the first codebook, and the second precoding matrix is one of the precoding matrices indicated by the TPMI indexes 2 to 5 shown in Table 1 or Table 12.

For example, when *Y* = 2, *Z* = 3, *K* = 1, and the second precoding matrix is one of the precoding matrices indicated by the TPMI indexes 2 to 5 shown in Table 12, ${C}_{3} = 1 / \sqrt{3}$. That is, the third precoding matrix satisfies the following structure: $\frac{1}{\sqrt{3}} \left[\begin{matrix}{W}_{1 , r = 1} \\ {W}_{Y , r = 1}\end{matrix}\right]$

In a possible implementation, the third precoding matrix shown in the case 1 to the case 3 is a fully-coherent precoding matrix, and may be used in a fully-coherent PUSCH transmission scenario.

Case 4: When *K* = 1, *Y < Z,* and the quantity of columns of the third precoding matrix is greater than 1 and less than or equal to *Z,* the third precoding matrix includes the first precoding matrix, the second precoding matrix, and a zero matrix. The first precoding matrix and the second precoding matrix are submatrices corresponding to different row indexes of the third precoding matrix.

In an example, that the first precoding matrix and the second precoding matrix are submatrices corresponding to different row indexes of the third precoding matrix may be understood as that row indexes of the *K* rows of the first precoding matrix in the third precoding matrix are different from row indexes of the *Y* rows of the second precoding matrix in the third precoding matrix.

For example, the *K* rows of the first precoding matrix are used as some elements in a 1^{st} row to a *K*^{th} row of the third precoding matrix, and the *Y* rows of the second precoding matrix are used as some elements in a (*K* + 1)^{th} row to a (*K* + *Y*)^{th} row of the third precoding matrix. Alternatively, the *Y* rows of the second precoding matrix are used as some elements in a 1^{st} row to a *Y*^{th} row of the third precoding matrix, and the K rows of the first precoding matrix are used as some elements in a (*Y* + 1)^{th} row to a (*Y* + *K*)^{th} row of the third precoding matrix.

In another example, that the first precoding matrix and the second precoding matrix are submatrices corresponding to different row indexes of the third precoding matrix may be understood as that the first precoding matrix and the second precoding matrix are submatrices on a diagonal of the third precoding matrix. For example, a position at which a row index and a column index are the same in the third precoding matrix is a position of a start element in the first precoding matrix or the second precoding matrix. The start element of the precoding matrix is an element in a 1^{st} row and a 1^{st} column of the precoding matrix. In addition, a position of a start element of the first precoding matrix in the third precoding matrix is different from a position of a start element of the second precoding matrix in the third precoding matrix.

In a first possible implementation, when the quantity of columns of the third precoding matrix is equal to Z, and Z *= Y* + 1, the first precoding matrix is a precoding matrix with one row and one column, and the second precoding matrix is a precoding matrix with *Y* rows and *Y* columns. For example, in this scenario, the third precoding matrix satisfies the following structure: ${C}_{4} \left[\begin{matrix}{W}_{1 , r = 1} & 0 \\ 0 & {W}_{Y , r = Y}\end{matrix}\right] ;$ or ${C}_{4} \left[\begin{matrix}{W}_{Y , r = Y} & 0 \\ 0 & {W}_{1 , r = 1}\end{matrix}\right]$

***W***_{1,*r*=1} represents the first precoding matrix, ***W**_{Y,r=Y}* represents the second precoding matrix, 0 represents the zero matrix, and *C*₄ represents a power coefficient. It may be understood that, in the first structure, an upper right zero matrix is a zero matrix with 1 rows and *Y* columns, and a lower left zero matrix is a zero matrix with *Y* rows and one column; and in the second structure, an upper right zero matrix is a zero matrix with *Y* rows and one column, and a lower left zero matrix is a zero matrix with 1 rows and *Y* columns.

For example, when *Y* = 2, and *Z* = 3, the first precoding matrix is a matrix with one row and one column, and the second precoding matrix is a matrix with two rows and two columns. For example, the first precoding matrix is one matrix in the first codebook, and the second precoding matrix is one of the precoding matrices indicated by the TPMI indexes 1 and 2 shown in Table 2 or Table 13.

For example, when *Y* = 2, *Z* = 3, and the second precoding matrix is one of the precoding matrices indicated by the TPMI indexes 1 and 2 shown in Table 2, ${C}_{4} = 1 / \sqrt{2}$. That is, the third precoding matrix satisfies the following structure: $\frac{1}{\sqrt{2}} \left[\begin{matrix}{W}_{1 , r = 1} & 0 \\ 0 & {W}_{2 , r = 2}\end{matrix}\right] ;$ or $\frac{1}{\sqrt{2}} \left[\begin{matrix}{W}_{2 , r = 2} & 0 \\ 0 & {W}_{1 , r = 1}\end{matrix}\right]$

In a second possible implementation, when the quantity of columns of the third precoding matrix is equal to *Y*, the first precoding matrix is a precoding matrix with one row and one column, and the second precoding matrix is a precoding matrix with *Y* rows and *Y -* 1 columns. For example, in this scenario, the third precoding matrix satisfies the following structure: ${C}_{5} \left[\begin{matrix}{W}_{1 , r = 1} & 0 \\ 0 & {W}_{Y , r = Y - 1}\end{matrix}\right] ;$ ; or ${C}_{5} \left[\begin{matrix}{W}_{Y , r = Y - 1} & 0 \\ 0 & {W}_{1 , r = 1}\end{matrix}\right]$

***W***_{1,*r*=1} represents the first precoding matrix, ***W***_{*Y,r=Y-*1} represents the second precoding matrix, **0** represents the zero matrix, and *C*₅ represents a power coefficient. It may be understood that, in the first structure, an upper right zero matrix is a zero matrix with 1 rows and *Y -* 1 columns, and a lower left zero matrix is a zero matrix with *Y* rows and one column; and in the second structure, an upper right zero matrix is a zero matrix with *Y* rows and one column, and a lower left zero matrix is a zero matrix with 1 rows and *Y* - 1 columns.

For example, when *Y* = 2, and *Z* = 3, the first precoding matrix is a matrix with one row and one column, and the second precoding matrix is a matrix with two rows and one column. For example, the first precoding matrix is one matrix in the first codebook, and the second precoding matrix is one of the precoding matrices indicated by the TPMI indexes 1 and 2 shown in Table 1 or Table 12.

For example, when *Y* = 2, *Z* = 3, and the second precoding matrix is one of the precoding matrices indicated by the TPMI indexes 2 to 5 shown in Table 1, ${C}_{5} = 1 / \sqrt{2}$. That is, the third precoding matrix satisfies the following structure: $\frac{1}{\sqrt{2}} \left[\begin{matrix}{W}_{1 , r = 1} & 0 \\ 0 & {W}_{2 , r = 1}\end{matrix}\right] ;$ or $\frac{1}{\sqrt{2}} \left[\begin{matrix}{W}_{2 , r = 1} & 0 \\ 0 & {W}_{1 , r = 1}\end{matrix}\right]$

Case 5: When *K* = 1, *Y < Z,* and the quantity of columns of the third precoding matrix is less than Z, the third precoding matrix includes the first precoding matrix and a zero matrix, or the third precoding matrix includes the second precoding matrix and a zero matrix.

In a first possible implementation, when the quantity of columns of the third precoding matrix is equal to *Y,* the third precoding matrix includes the second precoding matrix and the zero matrix, and the second precoding matrix is a precoding matrix with *Y* rows and *Y* columns. For example, in this scenario, the third precoding matrix satisfies the following structure: ${C}_{6} \left[\begin{matrix}0 \\ {W}_{Y , r = Y}\end{matrix}\right]$

***W**_{Y,r=Y}* represents the second precoding matrix, **0** represents the zero matrix, and *C*₆ represents a power coefficient. It may be understood that, in this structure, the zero matrix is a zero matrix with *Z - Y* rows and *Y* columns.

For example, when *Y* = 2, and Z = 3, the second precoding matrix is a matrix with two rows and two columns, and the zero matrix is a zero matrix with one row and two columns. For example, the second precoding matrix is one of the precoding matrices indicated by the TPMI indexes 1 and 2 shown in Table 2 or Table 13.

For example, when *Y* = 2, *Z* = 3, and the second precoding matrix is one of the precoding matrices indicated by the TPMI indexes 1 and 2 shown in Table 2, ${C}_{6} = 1 / \sqrt{2}$. That is, the third precoding matrix satisfies the following structure: $\frac{1}{\sqrt{2}} \left[\begin{matrix}0 \\ {W}_{2 , r = 2}\end{matrix}\right]$

In a second possible implementation, when the quantity of columns of the third precoding matrix is equal to 1, the third precoding matrix includes the first precoding matrix and the zero matrix, and the first precoding matrix is a precoding matrix with one row and one column. For example, in this scenario, the third precoding matrix satisfies the following structure: ${C}_{7} \left[\begin{matrix}{W}_{1 , r = 1} \\ 0\end{matrix}\right]$

***W***_{1,*r*=1} represents the first precoding matrix, and *C*₇ represents a power coefficient. It may be understood that the zero matrix is a zero matrix with *Z* - 1 rows and one column.

For example, when *Z* = 3, the first precoding matrix is a matrix with one row and one column. For example, the first precoding matrix is one matrix in the first codebook. In addition, in this case, ${C}_{7} = 1 / \sqrt{2}$, that is, the third precoding matrix satisfies the following structure: $\frac{1}{\sqrt{2}} \left[\begin{matrix}{W}_{1 , r = 1} \\ 0\end{matrix}\right]$

In a third possible implementation, when the quantity of columns of the third precoding matrix is equal to 1, the third precoding matrix includes the second precoding matrix and the zero matrix, and the second precoding matrix is a precoding matrix with *Y* rows and one column. For example, in this scenario, the third precoding matrix satisfies the following structure: ${C}_{8} \left[\begin{matrix}0 \\ {W}_{Y , r = 1}\end{matrix}\right]$

***W***_{*Y,r*=1} represents the second precoding matrix, **0** represents the zero matrix, and *C*₈ represents a power coefficient. It may be understood that the zero matrix is a zero matrix with *Z - Y* rows and one column.

For example, when *Y* = 2, the second precoding matrix is a matrix with two rows and one column. For example, the second precoding matrix is one of the precoding matrices indicated by the TPMI indexes 2 to 5 shown in Table 1 or Table 12.

For example, when *Y* = 2, and the second precoding matrix is one of the precoding matrices indicated by the TPMI indexes 2 to 5 shown in Table 1, ${C}_{8} = 1 / \sqrt{2}$. That is, the third precoding matrix satisfies the following structure: $\frac{1}{\sqrt{2}} \left[\begin{matrix}0 \\ {W}_{2 , r = 1}\end{matrix}\right]$

In a possible implementation, the third precoding matrix shown in the case 4 and the case 5 is a partial-coherent precoding matrix, and may be used in a partial-coherent PUSCH transmission scenario.

In addition to the fully-coherent precoding matrix and the partial-coherent precoding matrix, embodiments of this application further provide a third precoding matrix with *Z* rows and *R*₃ columns in a non-coherent scenario. In other words, the third precoding matrix corresponds to a PUSCH non-coherent transmission mode or non-coherent transmission codebook, or the third precoding matrix is a non-coherent precoding matrix.

In a possible implementation, there are a total of *C(Z, R₃)* possibilities for the third precoding matrix. For example, when *Z* = 3, *and R*₃ = 3, the third precoding matrix has a total of *C*(3,3) = 1 possible implementations; when Z = 3, *and R*₃ = 2, the third precoding matrix has a total of *C*(3,2) = 3 possible implementations; and when *Z* = 3, *and R*₃ = 1, the third precoding matrix has a total of *C*(3,1) = 3 possible implementations.

Optionally, if a transmission layer *i* is transmitted on an antenna port *p,* in a row corresponding to the antenna port p in the third precoding matrix, an element in a *i*^{th} column is 1, and an element in another column is 0.

For example, when the quantity of columns of the third precoding matrix is equal to 3, that is, the third precoding matrix is a precoding matrix with three rows and three columns, and three antenna ports are used to perform PUSCH transmission of three layers of data, the third precoding matrix satisfies the following structure: ${C}_{9} \left[\begin{matrix}1 & 0 & 0 \\ 0 & 1 & 0 \\ 0 & 0 & 1\end{matrix}\right]$

When the quantity of columns of the third precoding matrix is equal to 2, that is, the third precoding matrix is a precoding matrix with three rows and two columns, and three antenna ports are used to perform PUSCH transmission of two layers of data, the third precoding matrix satisfies one of the following structures: ${C}_{9} \left[\begin{matrix}0 & 0 \\ 1 & 0 \\ 0 & 1\end{matrix}\right]$ ${C}_{9} \left[\begin{matrix}1 & 0 \\ 0 & 0 \\ 0 & 1\end{matrix}\right]$ ${C}_{9} \left[\begin{matrix}1 & 0 \\ 0 & 1 \\ 0 & 0\end{matrix}\right]$

When the quantity of columns of the third precoding matrix is equal to 1, that is, the third precoding matrix is a precoding matrix with three rows and one column, and three antenna ports are used to perform PUSCH transmission of one layer of data, the third precoding matrix satisfies one of the following structures: ${C}_{9} \left[\begin{matrix}0 \\ 0 \\ 1\end{matrix}\right]$ ${C}_{9} \left[\begin{matrix}0 \\ 1 \\ 0\end{matrix}\right]$ ${C}_{9} \left[\begin{matrix}1 \\ 0 \\ 0\end{matrix}\right]$

*C*₉ represents a power coefficient. For example, ${C}_{9} = 1 / \sqrt{3}$. In addition, values of *C*₉ that correspond to different structures in the structures (1) to (7) may be the same or may be different. This is not limited.

Optionally, TPMI indexes corresponding to the structures (1) to (7) may be 6 to 0. Certainly, the TPMI indexes corresponding to the structures (1) to (7) may also be 0 to 6. This is not limited.

It should be noted that the foregoing merely describes a structure of the third precoding matrix by using examples, and does not constitute a limitation on the third precoding matrix. The third precoding matrix may also have another structure. For example, an order of rows and/or an order of columns in the structure shown in the foregoing embodiment may be changed to obtain a new third precoding matrix. In other words, the order of rows and/or the order of columns of the third precoding matrix are/is not limited in this application.

In addition, the power coefficient in the third precoding matrix is used to enable power of all antenna ports (or referred to as PUSCH ports) to be the same, and/or enable power of all third precoding matrices to be the same. In other words, a function of the power coefficient is to normalize the third precoding matrix, that is, ensure that a second norm of the third precoding matrix is 1, that is, ensure that a sum of squared moduli of all elements included in the third precoding matrix is 1. Therefore, a value of any power coefficient among the common *C*₁ to *C*₉ may be a reciprocal of a square root of the sum of the squared moduli of all the elements included in the third precoding matrix. The foregoing values of *C*₁ to *C*₉ are merely examples, and are not restrictive in practice. A specific value may be determined based on the first precoding matrix and/or the second precoding matrix that are/is included in the third precoding matrix. The examples in the foregoing embodiment do not constitute a limitation on the power coefficient.

The foregoing describes the third precoding matrix provided in this application. This application further provides a communication method based on the third precoding matrix. With reference to the accompanying drawings, the following describes the communication method by using interaction between a terminal and a RAN node as an example.

It should be noted that names of messages, parameters, information, or the like between the terminal and the RAN node in the following embodiments of this application are merely examples, and there may be other names in another embodiment. This is not specifically limited in the method provided in this application.

It may be understood that in embodiments of this application, the terminal or the RAN node may perform some or all steps in embodiments of this application. These steps or operations are merely examples. In embodiments of this application, other operations or various variations of the operations may be further performed. In addition, the steps may be performed in a sequence different from a sequence presented in embodiments of this application, and not all operations in embodiments of this application may be performed.

FIG. 2 is a flowchart of a communication method according to an embodiment of this application. The communication method may include the following steps.

S201: A RAN node sends first information and/or second information to a terminal. Correspondingly, the terminal receives the first information and/or the second information from the RAN node.

The first information indicates a first precoding matrix, and the second information indicates a second precoding matrix. For the first precoding matrix and the second precoding matrix, refer to the foregoing related descriptions. Details are not described herein again.

In a possible implementation, the first information includes an index of the first precoding matrix in a first codebook.

Optionally, when *K* = 1, the RAN node may preconfigure the first codebook. For example, before step S201, the RAN node may send information to the terminal to configure the first codebook. For example, the RAN node may send, to the terminal, fourth information indicating the first codebook. Correspondingly, the terminal receives the fourth information from the RAN node. The fourth information may be carried in higher layer signaling, for example, radio resource control (radio resource control, RRC) signaling. Alternatively, the first codebook may be predefined by protocol.

For example, a precoding matrix in the first codebook configured by the RAN node or the first codebook predefined in the protocol and a TPMI index corresponding to the precoding matrix may be shown in the following Table 15 to Table 17.

**Table 15**

| TPMI index (index) | Precoding matrix *W* (ordered from left to right in increasing order of TPMI indexes) | | | |
|---|---|---|---|---|
| 0 to 3 | [1] | [*j*] | [-1] | [-*j*] |

**Table 16**

| TPMI index (index) | Precoding matrix *W* (ordered from left to right in increasing order of TPMI indexes) | |
|---|---|---|
| 0 and 1 | [1] | [-1] |

**Table 17**

| TPMI index (index) | Precoding matrix *W* |
|---|---|
| 0 | [1] |

For example, when the first codebook is shown in Table 15, the first information occupies two bits (bits), and a value of the two bits is a TPMI index; when the first codebook is shown in Table 16, the first information occupies one bit, and a value of the bit is a TPMI index; or when the first codebook is shown in Table 17, the first information may occupy one bit, or the first information may be set to default, that is, the first precoding matrix is [1] by default.

Optionally, when *K* = 2, the first codebook may include at least one of the precoding matrices indicated by the TPMI indexes 2 to 5 shown in Table 1 or Table 12. For example, the first information may occupy two bits, and a correspondence between a value of the two bits and a TPMI index may be shown in Table 18.

**Table 18**

| Value of the two bits | TPMI index |
|---|---|
| 0 | TPMI = 2 |
| 1 | TPMI = 3 |
| 2 | TPMI = 4 |
| 3 | TPMI = 5 |

In another possible implementation, an existing field may be reused for the first information, to implicitly indicate the first precoding matrix. For example, a field (for example, an antenna port field) indicating a DMRS port may be reused to indicate the first precoding matrix.

For example, the first information may include a first value, and the first value indicates a DMRS port index. For example, the first value is a value of an antenna port field in DCI, for example, a value (value) in Table 8 to Table 11. There is an association relationship between the index of the first precoding matrix in the first codebook and the first value, or there is an association relationship between the index of the first precoding matrix in the first codebook and a DMRS port.

Optionally, when the first value indicates a plurality of DMRS ports, there is an association relationship between the index of the first precoding matrix in the first codebook and one of the plurality of DMRS ports. For example, the DMRS port may be a 1 ^{st} DMRS port, a last DMRS port, or any DMRS port in the plurality of DMRS ports. This is not specifically limited in this application. The example shown in Table 9 is used. Assuming that the first value is 0, the first value indicates a DMRS port 0 and a DMRS port 1. In this case, there is an association relationship between the index of the first precoding matrix in the first codebook and the DMRS port 0 or the DMRS port 1.

In a possible implementation, the index n of the first precoding matrix in the first codebook satisfies the following relationship: $n = L mod N$

*L* represents the DMRS port index or the first value. When the first value indicates a plurality of DMRS ports, the DMRS port index herein is an index of one of the plurality of DMRS ports. For the DMRS port, refer to the foregoing related descriptions. Details are not described herein again. *N* represents a quantity of precoding matrices in the first codebook, and *L* and *N* are positive integers.

For example, when *K =* 1, and the first codebook is shown in Table 15, or when *K =* 2, the first codebook is shown in Table 12, Table 13, or Table 14, and TPMI indexes corresponding to the precoding matrices shown in each of Table 12 to Table 14 start from 0, the association relationship between the index *n* of the precoding matrix in the first codebook and the DMRS port index or the first value may be shown in Table 19.

**Table 19**

| Index of the precoding matrix | Precoding matrix (*K* = 1) | TPMI index (*K* = 2) | Association relationship corresponding to the DMRS port index or the first value |
|---|---|---|---|
| 0 | 1 | TPMI=0 | *L mod N =* 0 |
| 1 | *j* | TPMI=1 | *L mod N =* 1 |
| 2 | -1 | TPMI=2 | *L mod N = 2* |
| 3 | -*j* | TPMI=3 | *L mod N =* 3 |

In another possible implementation, when *K* = 2, the first codebook is shown in any one of Table 1 to Table 3 and Table 12 to Table 14, and the TPMI indexes in Table 1 to Table 3 are respectively used in Table 12 to Table 14, the association relationship between the index n of the precoding matrix in the first codebook and the DMRS port index or the first value may be shown in Table 20.

**Table 20**

| TPMI index (*K* = 2) | Association relationship corresponding to the DMRS port index or the first value |
|---|---|
| TPMI = 2 | *L mod N* = 0 |
| TPMI = 3 | *L mod N =* 1 |
| TPMI = 4 | *L mod N = 2* |
| TPMI = 5 | *L mod N =* 3 |

It should be noted that the correspondences shown in Table 18 to Table 20 are merely examples. During actual implementation, there may be another correspondence. For example, in the solution corresponding to Table 18, when a value of the two bits is 0, a TPMI index may not be equal to 2, for example, may be equal to 5. In other words, a row order corresponding to a column in Table 18 to Table 20 may remain unchanged, and a row order corresponding to at least one other column may be changed, to obtain a new correspondence. All these correspondences fall within the protection scope of this application.

It should be noted that the association relationship between the index of the first precoding matrix in the first codebook and the DMRS port includes but is not limited to the modulo relationship, and may further include another association relationship. For example, in a possible implementation, the index *n* of the first precoding matrix in the first codebook satisfies the following relationship: $n = L - N$

*L* represents the DMRS port index or the first value, *N* represents a quantity of precoding matrices in the first codebook, and *L* and *N* are positive integers.

In a possible implementation, for an implementation in which the second information indicates the second precoding matrix, refer to an existing TPMI indication manner. For example, the second information may be carried in a *precoding information and number of layers* field in DCI, and a value of the field indicates a TPMI index of the second precoding matrix.

Optionally, the second information may further indicate a quantity of PUSCH transmission layers corresponding to the second precoding matrix. For example, the second information may be carried in a *precoding information and number of layers* field in DCI, and a value of the field indicates a TPMI index and a quantity of transmission layers of the second precoding matrix.

For example, the quantity of PUSCH transmission layers corresponding to the second precoding matrix may be equal to a quantity of transmission layers of the first PUSCH, that is, equal to a quantity of columns of a third precoding matrix.

In a possible implementation, when *Y* > *Z*, as shown in the case 1, in addition to the second information indicating the second precoding matrix, the RAN node may further send third information to the terminal. Correspondingly, the terminal receives the third information from the RAN node. The third information indicates a type of the third precoding matrix, and the type of the third precoding matrix indicates an association relationship between the third precoding matrix and the second precoding matrix.

For example, the association relationship indicates row indexes of *Z* rows of the second precoding matrix. A submatrix that is of the second precoding matrix and that is included in the third precoding matrix includes the *Z* rows of the second precoding matrix. In other words, it may be considered that the third information indicates the row indexes of the *Z* rows that are of the second precoding matrix and that are included in the third precoding matrix, or the third information indicates a submatrix of the second precoding matrix, and the submatrix is the submatrix included in the third precoding matrix.

In a possible implementation, the third information includes a type index of the third precoding matrix, and different types correspond to different row indexes of the *Z* rows of the second precoding matrix. The example in the case 1 in which *Z* = 3 is used. If the third information is a type index 1, the third precoding matrix includes a 1^{st} row, a 2^{nd} row, and a 3^{rd} row of the second precoding matrix.

Optionally, the RAN node may preconfigure a type universal set of the third precoding matrix, or a protocol may predefine a type universal set of the third precoding matrix. The RAN node determines, based on a quantity of types in the type universal set, a quantity of bits occupied by the third information. The example in the case 1 in which *Z* = 3 is used. If the type universal set includes all four types, the third information occupies two bits. If the type universal set includes two of the four types (for example, a type 1 and a type 2), the third information occupies one bit.

In another possible implementation, the third information includes the row indexes of the *Z* rows of the second precoding matrix. For example, if the third information includes row indexes 1, 2, and 3, it indicates that the third precoding matrix includes a 1^{st} row, a 2^{nd} row, and a 3^{rd} row of the second precoding matrix.

In still another possible implementation, an existing field may be reused for the third information, to implicitly indicate the type of the third precoding matrix. For example, a field (for example, an antenna port field) indicating a DMRS port may be reused to indicate the type of the third precoding matrix.

For example, the first information may include the first value, and the first value indicates the DMRS port index. For example, the first value is a value of an antenna port field in DCI, for example, a value (value) in Table 8 to Table 11. There is an association relationship between the type of the third precoding matrix and the first value, or there is an association relationship between the type of the third precoding matrix and the DMRS port indicated by the first value.

Optionally, when the first value indicates a plurality of DMRS ports, there is an association relationship between the type of the third precoding matrix and one of the plurality of DMRS ports. For the DMRS port, refer to related descriptions of the first information. Details are not described herein again.

For example, the type index *m* of the third precoding matrix satisfies the following relationship: $m = \left(L mod B\right) + 1$

*L* represents the DMRS port index or the first value. When the first value indicates a plurality of DMRS ports, the DMRS port index herein is an index of one of the plurality of DMRS ports. For the DMRS port, refer to the foregoing related descriptions. Details are not described herein again. *B* represents a quantity of types in the type universal set of the third precoding matrix, and *L* and *B* are positive integers.

The example in the case 1 in which *Z* = 3 is used. The association relationship between the type index of the third precoding matrix and the DMRS port index or the first value may be shown in Table 21.

**Table 21**

| Type index of the third precoding matrix | Association relationship corresponding to the DMRS port index or the first value | *L mod B* |
|---|---|---|
| 1 | (*L mod B*) + 1 = 1 | *L mod B =* 0 |
| 2 | (*L mod B*) + 1 = 2 | *L mod B* = 1 |
| 3 | (*L mod B*) + 1 = 3 | *L mod B =* 2 |
| 4 | (*L mod B*) + 1 = 4 | *L mod B* = 3 |

It should be noted that the correspondence shown in Table 21 is merely an example. During actual implementation, there may be another correspondence. For example, in the solution corresponding to Table 21, when (*L mod B*) *+* 1 = 1, the type index of the third precoding matrix may not be equal to 1, for example, may be equal to 4. In other words, a row order corresponding to a column in Table 21 may remain unchanged, and a row order corresponding to at least one other column may be changed, to obtain a new correspondence. All these correspondences fall within the protection scope of this application.

In a possible implementation, alternatively, the RAN node may not send the third information. For example, a protocol may predefine a type of the third precoding matrix. In this case, the terminal determines the type of the third precoding matrix according to the protocol.

S202: The terminal transmits a first PUSCH over *Z* antenna ports. Correspondingly, the RAN node receives the first PUSCH over the *Z* antenna ports.

The *Z* antenna ports are precoded based on the third precoding matrix. Optionally, before step S202, the terminal may determine the third precoding matrix.

In a possible implementation, the terminal may determine the third precoding matrix based on the first information and/or the second information. Further, the terminal determines the third precoding matrix based on the third information and/or the fourth information.

In another possible implementation, step S201 may not be performed, that is, step S201 is optional. In this scenario, a protocol may predefine the first precoding matrix and/or the second precoding matrix, and the terminal determines the third precoding matrix based on the first precoding matrix and/or the second precoding matrix that are/is predefined in the protocol.

Based on the foregoing solution provided in this application, a precoding matrix for PUSCH transmission over the *Z* antenna ports may be obtained based on the precoding matrix for PUSCH transmission over the *K* antenna ports and/or the precoding matrix for PUSCH transmission over the *Y =* 2*^{X}* antenna ports to enable PUSCH transmission over the *Z* antenna ports. When *Z* is less than 4 (for example, *Z* = 3), the method is applicable to prevalent terminals with a small quantity of uplink transmit antennas, thereby reducing terminal costs.

In addition, a current standard defines precoding matrices for PUSCH transmission over two antenna ports and four antenna ports. Therefore, the second precoding matrix for PUSCH transmission over the *Y* = 2*^{X}* antenna ports may be a precoding matrix for two or four antenna ports as defined in the current standard, so that compatibility of the third precoding matrix with the current standard can be improved.

It should be noted that, in this application, "sending information to... (a terminal)" may be understood as that a destination end of the information is the terminal, and may include directly or indirectly sending the information to the terminal. "Receiving information from... (a RAN node)" may be understood as that a source end of the information is the RAN node, and may include directly or indirectly receiving the information from the RAN node. Information may undergo necessary processing, for example, a format change, between a source end and a destination end of information sending. However, the destination end may understand valid information from the source end. Similar expressions in this application may be understood similarly, and details are not described herein again.

It may be understood that, in the foregoing embodiments, the method and/or steps implemented by the terminal may also be implemented by a component (for example, a processor, a chip, a chip system, a circuit, a logical module, or software) that can be used in the terminal, and the method and/or steps implemented by the RAN node may also be implemented by a component (for example, a processor, a chip, a chip system, a circuit, a logical module, or software) that can be used in the RAN node. The chip system may include a chip, or the chip system may include a chip and another discrete component.

For example, when the component that can be used in the terminal/RAN node implements the method and/or steps implemented by the terminal/RAN node, a sending action/function may be understood as outputting information, and a receiving action/function may be understood as inputting information.

It may be understood that, to implement the foregoing functions, the communication apparatus includes a corresponding hardware structure and/or software module for performing each function. A person skilled in the art should easily be aware that, in combination with units and algorithm steps of the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing module. The integrated module may be implemented in the form of hardware, or may be implemented in the form of a software functional module. It should be noted that, in embodiments of this application, division into the modules is an example, and is merely logical function division. During actual implementation, another division manner may be used.

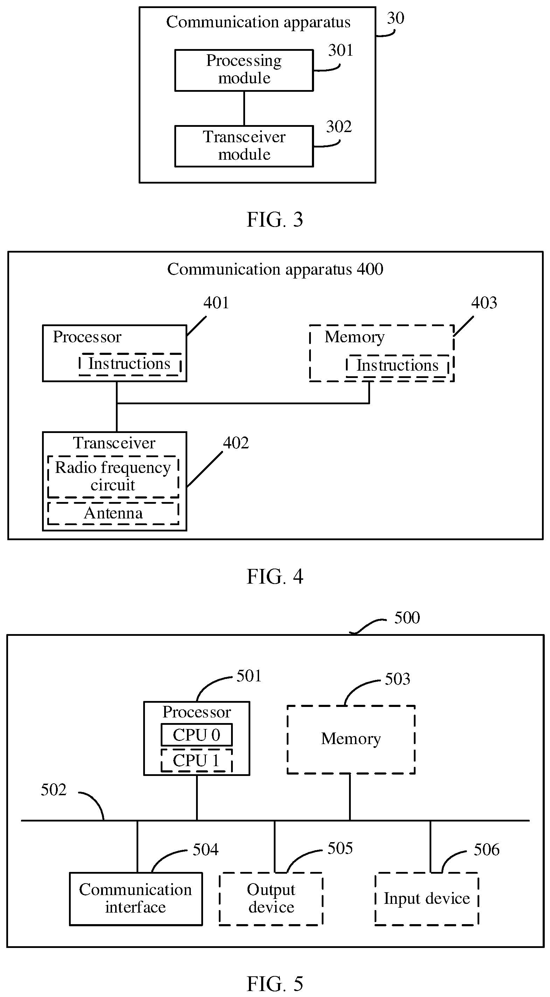

FIG. 3 of a communication apparatus is a diagram of a structure of a communication apparatus 30. The communication apparatus 30 includes a processing module 301 and a transceiver module 302. The communication apparatus 30 may be configured to implement a function of the terminal or the RAN node.

In some embodiments, the communication apparatus 30 may further include a storage module (not shown in FIG. 3), configured to store program instructions and data.

In some embodiments, the transceiver module 302 may also be referred to as a transceiver unit, configured to implement a sending function and/or a receiving function. The transceiver module 302 may include a transceiver circuit, a transceiver machine, a transceiver, or a communication interface.

In some embodiments, the transceiver module 302 may include a receiving module and a sending module, respectively configured to perform receiving steps and sending steps performed by the terminal or the RAN node in the method embodiment, and/or configured to support another process of the technology described in this specification; and the processing module 301 may be configured to perform processing (for example, determining) steps performed by the terminal or the RAN node in the method embodiment, and/or configured to support another process of the technology described in this specification.

When the communication apparatus 30 is configured to implement a function of the terminal:
The processing module 301 is configured to receive first information and/or second information through the transceiver module 302. The processing module 301 is further configured to transmit a first PUSCH over *Z* antenna ports through the transceiver module 302. The first information indicates a first precoding matrix, the first precoding matrix is a precoding matrix for PUSCH transmission over *K* antenna ports, and *K* is a positive integer. The second information indicates a second precoding matrix, the second precoding matrix is a precoding matrix for PUSCH transmission over *Y* antenna ports, *Y = 2^{X} ,* and *X* is a positive integer. The *Z* antenna ports are precoded based on the third precoding matrix. The third precoding matrix includes the first precoding matrix and/or the second precoding matrix, or the third precoding matrix includes a submatrix of the second precoding matrix, and *Z* is a positive integer greater than 1.

Optionally, when *Y* > *Z*, and a quantity of columns of the third precoding matrix is equal to Z, the processing module 301 is further configured to receive third information through the transceiver module 302, where the third information indicates a type of the third precoding matrix, and the type of the third precoding matrix indicates an association relationship between the third precoding matrix and the second precoding matrix.

Optionally, the first precoding matrix is located in a first codebook. The processing module 301 is further configured to receive fourth information through the transceiver module 302, where the fourth information indicates the first codebook.

When the communication apparatus 30 is configured to implement a function of the RAN node:
The processing module 301 is configured to send first information and/or second information through the transceiver module 302. The processing module 301 is further configured to receive a first PUSCH over *Z* antenna ports through the transceiver module 302. The first information indicates a first precoding matrix, the first precoding matrix is a precoding matrix for physical uplink shared channel PUSCH transmission over *K* antenna ports, and *K* is a positive integer. The second information indicates a second precoding matrix, the second precoding matrix is a precoding matrix for PUSCH transmission over *Y* antenna ports, *Y =* 2*^{X},* and *X* is a positive integer. The *Z* antenna ports are precoded based on a third precoding matrix. The third precoding matrix includes the first precoding matrix and/or the second precoding matrix, or the third precoding matrix includes a submatrix of the second precoding matrix, and *Z* is a positive integer greater than 1.

Optionally, when *Y > Z,* and a quantity of columns of the third precoding matrix is equal to *Z,* the processing module 301 is further configured to send third information through the transceiver module 302, where the third information indicates a type of the third precoding matrix, and the type of the third precoding matrix indicates an association relationship between the third precoding matrix and the second precoding matrix.

Optionally, the first precoding matrix is located in a first codebook, and the processing module 301 is further configured to send fourth information, where the fourth information indicates the first codebook.

In a possible implementation, that the processing module sends information through the transceiver module may be understood as that the processing module outputs the information to the transceiver module, and the transceiver module sends the information; and that the processing module receives information through the transceiver module may be understood as that the transceiver module receives the information and inputs the information to the processing module.

All related content of the steps in the method embodiment may be cited in function descriptions of the corresponding functional modules. Details are not described herein again.

In this application, the communication apparatus 30 may be presented in the form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 30 in FIG. 3 is a chip or a chip system, a function/implementation process of the transceiver module 302 may be implemented by an input/output interface (or a communication interface) of the chip or the chip system, and a function/implementation process of the processing module 301 may be implemented by a processor (or a processing circuit) of the chip or the chip system.

The communication apparatus 30 provided in this embodiment may perform the foregoing method. Therefore, for technical effect that can be achieved by the communication apparatus, refer to the foregoing method embodiment. Details are not described herein again.

In a possible product form, the terminal or the RAN node in embodiments of this application may be also implemented by using the following: one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described throughout this application.

In another possible product form, the terminal or the RAN node in embodiments of this application may be implemented by using a general bus architecture. For ease of description, refer to FIG. 4. FIG. 4 is a diagram of a structure of a communication apparatus 400 according to an embodiment of this application. The communication apparatus 400 includes a processor 401 and a transceiver 402. The communication apparatus 400 may be a terminal, or a chip or a chip system in the terminal. Alternatively, the communication apparatus 400 may be a RAN node, or a chip or a module in the RAN node. FIG. 4 shows only main components in the communication apparatus 400. In addition to the processor 401 and the transceiver 402, the communication apparatus may further include a memory 403 and an input/output apparatus (not shown in the figure).

Optionally, the processor 401 is mainly configured to: process a communication protocol and communication data, control the entire communication apparatus, execute a software program, and process data of the software program, to implement the method provided in the method embodiment. The memory 403 is mainly configured to store the software program and data. The transceiver 402 may include a radio frequency circuit and an antenna. The radio frequency circuit is mainly configured to perform conversion between a baseband signal and a radio frequency signal and process the radio frequency signal. The antenna is mainly configured to receive and send radio frequency signals in the form of an electromagnetic wave. The input/output apparatus, for example, a touchscreen, a display, or a keyboard, is mainly configured to receive data input by a user and output data to the user.

Optionally, the processor 401, the transceiver 402, and the memory 403 may be connected through a communication bus.

After the communication apparatus is powered on, the processor 401 may read the software program in the memory 403, interpret and execute instructions of the software program, and process the data of the software program. When data needs to be sent in a wireless manner, the processor 401 performs baseband processing on the to-be-sent data, and outputs a baseband signal to the radio frequency circuit. The radio frequency circuit performs radio frequency processing on the baseband signal, and then sends a radio frequency signal to the outside through the antenna in the form of an electromagnetic wave. When data is sent to the communication apparatus, the radio frequency circuit receives a radio frequency signal through the antenna, converts the radio frequency signal into a baseband signal, and outputs the baseband signal to the processor 401. The processor 401 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 30 may be in the form of the communication apparatus 400 shown in FIG. 4.

In an example, a function/implementation process of the processing module 301 in FIG. 3 may be implemented by the processor 401 in the communication apparatus 400 shown in FIG. 4 by invoking the computer-executable instructions stored in the memory 403. A function/implementation process of the transceiver module 302 in FIG. 3 may be implemented by the transceiver 402 in the communication apparatus 400 shown in FIG. 4.

In another possible product form, the terminal or the RAN node in this application may use a composition structure shown in FIG. 5, or include components shown in FIG. 5. FIG. 5 is a diagram of composition of a communication apparatus 500 according to this application. The communication apparatus 500 may be a terminal, or a chip or a system on chip in the terminal; or may be a RAN node, or a module, a chip, or a system on chip in the RAN node.

As shown in FIG. 5, the communication apparatus 500 includes at least one processor 501 and at least one communication interface (in FIG. 5, only an example in which one communication interface 504 and one processor 501 are included is used for description). Optionally, the communication apparatus 500 may further include a communication bus 502 and a memory 503.

The processor 501 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. The processor 501 may also be another apparatus having a processing function, for example, a circuit, a component, or a software module. This is not limited.

The communication bus 502 is configured to connect different components in the communication apparatus 500, so that the different components can communicate with each other. The communication bus 502 may be a peripheral component interconnect (peripheral component interconnect, PCI) bus or an extended industry standard architecture (extended industry standard architecture, EISA) bus, or the like. The bus may be classified as an address bus, a data bus, a control bus, or the like. For ease of representation, only one thick line is used to represent the bus in FIG. 5, but this does not mean that there is only one bus or only one type of bus.

The communication interface 504 is configured to communicate with another device or a communication network. For example, the communication interface 504 may be a module, a circuit, a transceiver, or any apparatus that can implement communication. Optionally, the communication interface 504 may also be an input/output interface located in the processor 501, and is configured to implement signal input and signal output of the processor.

The memory 503 may be an apparatus having a storage function, and is configured to store instructions and/or data. The instructions may be a computer program.

For example, the memory 503 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 503 may be independent of the processor 501, or may be integrated with the processor 501. The memory 503 may be located inside the communication apparatus 500, or may be located outside the communication apparatus 500. This is not limited. The processor 501 may be configured to execute the instructions stored in the memory 503, to implement the method provided in the following embodiment of this application.

In an optional implementation, the communication apparatus 500 may further include an output device 505 and an input device 506. The output device 505 communicates with the processor 501, and may display information in a plurality of manners. For example, the output device 505 may be a liquid crystal display (liquid crystal display, LCD), a light-emitting diode (light-emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, or a sensing device.

In some embodiments, in hardware implementation, a person skilled in the art may figure out that the communication apparatus 30 shown in FIG. 3 may be in the form of the communication apparatus 500 shown in FIG. 5.

In an example, a function/implementation process of the processing module 301 in FIG. 3 may be implemented by the processor 501 in the communication apparatus 500 shown in FIG. 5 by invoking the computer-executable instructions stored in the memory 503. A function/implementation process of the transceiver module 302 in FIG. 3 may be implemented by the communication interface 504 in the communication apparatus 500 shown in FIG. 5.

It should be noted that the structure shown in FIG. 5 does not constitute a specific limitation on the terminal or the RAN node. For example, in some other embodiments of this application, the terminal or the RAN node may include more or fewer components than those shown in the figure, some components may be combined, or some components may be split, or different component arrangements may be used. The components shown in the figure may be implemented by using hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any one of the foregoing method embodiments. Certainly, alternatively, the memory may not be in the communication apparatus.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read through another device) and transmit the computer-executable instructions to a processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the described system, apparatuses, and units, refer to a corresponding process in the method embodiment. Details are not described herein again.

It may be understood that the system, apparatuses, and method described in this application may also be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, that is, may be located at one position, or may be distributed on a plurality of network units. A part displayed as a unit may or may not be a physical unit. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the embodiments, all or some of the embodiments may be implemented in the form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations, or equivalents that cover the scope of this application. Clearly, a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, wherein the method comprises:
receiving first information and/or second information, wherein the first information indicates a first precoding matrix, the first precoding matrix is a precoding matrix for physical uplink shared channel PUSCH transmission over K antenna ports, and K is a positive integer; and the second information indicates a second precoding matrix, the second precoding matrix is a precoding matrix for PUSCH transmission over *Y* antenna ports, *Y =* 2*^{X}*, and *X* is a positive integer;
transmitting a first PUSCH over Z antenna ports, wherein the Z antenna ports are precoded based on a third precoding matrix, the third precoding matrix comprises the first precoding matrix and/or the second precoding matrix, or the third precoding matrix comprises a submatrix of the second precoding matrix, and Z is a positive integer greater than 1.

2. The method according to claim 1, wherein when *Y > Z,* and a quantity of columns of the third precoding matrix is equal to Z, the method further comprises:
receiving third information, wherein the third information indicates a type of the third precoding matrix, and the type of the third precoding matrix indicates an association relationship between the third precoding matrix and the second precoding matrix.

3. The method according to claim 1 or 2, wherein the first precoding matrix is located in a first codebook, and the method further comprises:
receiving fourth information, wherein the fourth information indicates the first codebook.

4. A communication method, wherein the method comprises:
sending first information and/or second information, wherein the first information indicates a first precoding matrix, the first precoding matrix is a precoding matrix for physical uplink shared channel PUSCH transmission over K antenna ports, and K is a positive integer; and the second information indicates a second precoding matrix, the second precoding matrix is a precoding matrix for PUSCH transmission over *Y* antenna ports, *Y =* 2*^{X}*, and *X* is a positive integer;
receiving a first PUSCH over Z antenna ports, wherein the Z antenna ports are precoded based on a third precoding matrix, the third precoding matrix comprises the first precoding matrix and/or the second precoding matrix, or the third precoding matrix comprises a submatrix of the second precoding matrix, and Z is a positive integer greater than 1.

5. The method according to claim 4, wherein when *Y > Z,* and a quantity of columns of the third precoding matrix is equal to Z, the method further comprises:
sending third information, wherein the third information indicates a type of the third precoding matrix, and the type of the third precoding matrix indicates an association relationship between the third precoding matrix and the second precoding matrix.

6. The method according to claim 4 or 5, wherein the first precoding matrix is located in a first codebook, and the method further comprises:
sending fourth information, wherein the fourth information indicates the first codebook.

7. The method according to claim 2 or 5, wherein the association relationship indicates row indexes of Z rows of the second precoding matrix, and the submatrix is formed by the Z rows of the second precoding matrix.

8. The method according to any one of claims 1 to 7, wherein when *Y* > Z, and the quantity of columns of the third precoding matrix is equal to Z, the third precoding matrix comprises the submatrix of the second precoding matrix, and the submatrix corresponds to the Z rows; or
when *Y* < Z, the third precoding matrix comprises the first precoding matrix and/or the second precoding matrix.

9. The method according to any one of claims 1 to 8, wherein when *Y* > Z, the quantity of columns of the third precoding matrix is equal to *A,* and *A* ≤ *Z,* the third precoding matrix satisfies the following structure: ${C}_{1} \left[{W}_{Y , r = A}\left(\left[{y}_{1},{y}_{2},…,{y}_{Z}\right],:\right)\right] ,$ wherein
***W***_{*Y,r*=*A*} represents the second precoding matrix with *Y* rows and *A* columns, *C*₁ represents a power coefficient, *y*₁, *y*₂, ..., *y_{Z}* ∈ [1,*Y*], and the third precoding matrix is a matrix with Z rows and A columns.

10. The method according to any one of claims 1 to 9, wherein when *Y* < Z, and the quantity of columns of the third precoding matrix is greater than 1 and less than Z, the third precoding matrix comprises a transposed matrix of the first precoding matrix and the second precoding matrix.

11. The method according to claim 10, wherein when the quantity of columns of the third precoding matrix is equal to 2, *K* = 2, the first precoding matrix is a precoding matrix with two rows and *Q* columns, the second precoding matrix is a precoding matrix with *Y* rows and two columns, and *Q + Y = Z.*

12. The method according to claim 11, wherein the third precoding matrix satisfies the following structure: ${C}_{2} \left[\begin{matrix}{W}_{2 , r = Q}^{T} \\ {W}_{Y , r = 2}\end{matrix}\right] ,$ wherein
${W}_{2 , r = Q}^{T}$ represents the transposed matrix of the first precoding matrix, ***W***_{*Y,r*=2} represents the second precoding matrix, and *C*₂ represents a power coefficient.

13. The method according to any one of claims 1 to 9, wherein when *Y* < *Z*, and the quantity of columns of the third precoding matrix is equal to 1, *K* = 1, and the third precoding matrix comprises the first precoding matrix and the second precoding matrix, wherein the first precoding matrix is a precoding matrix with one row and one column, and the second precoding matrix is a precoding matrix with *Y* rows and one column.

14. The method according to claim 13, wherein the third precoding matrix satisfies the following structure: ${C}_{3} \left[\begin{matrix}{W}_{1 , r = 1} \\ {W}_{Y , r = 1}\end{matrix}\right] ,$ wherein
***W***_{1,*r*=1} represents the first precoding matrix, ***W***_{*Y,r*=1} represents the second precoding matrix, and *C*₃ represents a power coefficient.

15. The method according to any one of claims 1 to 8, wherein when *K* = 1, *Y* < *Z*, and the quantity of columns of the third precoding matrix is greater than 1 and less than or equal to *Z*, the third precoding matrix comprises the first precoding matrix, the second precoding matrix, and a zero matrix, wherein the first precoding matrix and the second precoding matrix are submatrices corresponding to different row indexes of the third precoding matrix.

16. The method according to claim 15, wherein when the quantity of columns of the third precoding matrix is equal to *Z*, and *Z = Y* + 1, the first precoding matrix is a precoding matrix with one row and one column, and the second precoding matrix is a precoding matrix with *Y* rows and *Y* columns; or
when the quantity of columns of the third precoding matrix is equal to *Y,* the first precoding matrix is a precoding matrix with one row and one column, and the second precoding matrix is a precoding matrix with *Y* rows and *Y* - 1 columns.

17. The method according to claim 16, wherein when the quantity of columns of the third precoding matrix is equal to *Z*, the third precoding matrix satisfies the following structure: ${C}_{4} \left[\begin{matrix}{W}_{1 , r = 1} & 0 \\ 0 & {W}_{Y , r = Y}\end{matrix}\right] ;$ or ${C}_{4} \left[\begin{matrix}{W}_{Y , r = Y} & 0 \\ 0 & {W}_{1 , r = 1}\end{matrix}\right] ,$ wherein
***W***_{1,*r*=1} represents the first precoding matrix, ***W***_{*Y,r*=*Y*} represents the second precoding matrix, **0** represents the zero matrix, and *C*₄ represents a power coefficient.

18. The method according to claim 16, wherein when the quantity of columns of the third precoding matrix is equal to *Y,* the third precoding matrix satisfies the following structure: ${C}_{5} \left[\begin{matrix}{W}_{1 , r = 1} & 0 \\ 0 & {W}_{Y , r = Y - 1}\end{matrix}\right] ;$ or ${C}_{5} \left[\begin{matrix}{W}_{Y , r = Y - 1} & 0 \\ 0 & {W}_{Y , r = 1}\end{matrix}\right] ,$ wherein
***W***_{1,*r*=1} represents the first precoding matrix, ***W***_{*Y,r*=*Y*-1} represents the second precoding matrix, **0** represents the zero matrix, and *C*₅ represents a power coefficient.

19. The method according to any one of claims 1 to 8, wherein when K = 1, *Y* < Z, and the quantity of columns of the third precoding matrix is greater than or equal to 1 and less than *Z*, the third precoding matrix comprises the first precoding matrix and a zero matrix, or the third precoding matrix comprises the second precoding matrix and a zero matrix.

20. The method according to claim 19, wherein when the quantity of columns of the third precoding matrix is equal to *Y,* the second precoding matrix is a precoding matrix with *Y* rows and *Y* columns; or
when the quantity of columns of the third precoding matrix is equal to 1, the first precoding matrix is a precoding matrix with one row and one column, or the second precoding matrix is a precoding matrix with *Y* rows and one column.

21. The method according to claim 20, wherein when the quantity of columns of the third precoding matrix is equal to *Y,* the third precoding matrix satisfies the following structure: ${C}_{6} \left[\begin{matrix}0 \\ {W}_{Y , r = Y}\end{matrix}\right] ,$ wherein
***W***_{*Y,r*=*Y*} represents the second precoding matrix, **0** represents the zero matrix, and *C*₆ represents a power coefficient.

22. The method according to claim 20, wherein when the quantity of columns of the third precoding matrix is equal to 1, the third precoding matrix satisfies the following structure: ${C}_{7} \left[\begin{matrix}{W}_{1 , r = 1} \\ 0\end{matrix}\right] ;$ or ${C}_{8} \left[\begin{matrix}0 \\ {W}_{Y , r = 1}\end{matrix}\right] ,$ wherein
***W***_{1,*r*=1} represents the first precoding matrix, ***W***_{*Y,r*=1} represents the second precoding matrix, **0** represents the zero matrix, and *C*₇ and *C*₈ represent power coefficients.

23. The method according to any one of claims 1 to 22, wherein *K* = 1, and the first precoding matrix is located in the first codebook; and
when a terminal supports 2-bit phase adjustment between coherent antenna groups corresponding to the *K* antenna ports and the *Y* antenna ports, a maximum quantity of precoding matrices in the first codebook is 4;
when a terminal supports 1-bit phase adjustment between coherent antenna groups corresponding to the *K* antenna ports and the *Y* antenna ports, a maximum quantity of precoding matrices in the first codebook is 2; or
when a terminal does not support phase adjustment between coherent antenna groups corresponding to the *K* antenna ports and the *Y* antenna ports, a maximum quantity of precoding matrices in the first codebook is 1.

24. The method according to any one of claims 1 to 23, wherein the first precoding matrix is located in the first codebook; and
when the maximum quantity of precoding matrices in the first codebook is 4, the first codebook comprises at least one of {1,*j,* -1, -*j*};
when the maximum quantity of precoding matrices in the first codebook is 2, the first codebook comprises at least one of {1, -1}; or
when the maximum quantity of precoding matrices in the first codebook is 1, the first codebook is {1}.

25. The method according to any one of claims 1 to 24, wherein the first information comprises an index of the first precoding matrix in the first codebook.

26. The method according to any one of claims 1 to 24, wherein the first information comprises a first value, and the first value indicates a demodulation reference signal DMRS port index; and
there is an association relationship between the index of the first precoding matrix in the first codebook and the DMRS port index; or there is an association relationship between the index of the first precoding matrix in the first codebook and the first value.

27. The method according to claim 26, wherein an index *n* of the first precoding matrix in the first codebook satisfies the following relationship: $n = L mod N ,$ wherein
*L* represents the DMRS port index or the first value, *N* represents a quantity of precoding matrices in the first codebook, and *L* and *N* are positive integers.

28. The method according to any one of claims 1 to 27, wherein the second information further indicates a quantity of PUSCH transmission layers corresponding to the second precoding matrix.

29. A communication apparatus, wherein the communication apparatus comprises a processor, and the processor is configured to run a computer program or instructions, to enable the communication apparatus to perform the method according to any one of claims 1 to 28.

30. A computer-readable storage medium, wherein the computer-readable storage medium stores computer instructions or a program, and when the computer instructions or the program is run on a computer, the method according to any one of claims 1 to 28 is performed.

31. A computer program product, wherein the computer program product comprises computer instructions, and when some or all of the computer instructions are run on a computer, the method according to any one of claims 1 to 28 is performed.
